# EUROPEAN PATENT SPECIFICATION

(11) **EP 4 137 973 B1**
(45) Date of publication and mention of the grant of the patent: **02.09.2026**
(21) Application number: 21803343.9
(22) Date of filing: 25.04.2021
(51) Int. Cl.: G06F 17/40, G06F 3/048, G06F 3/0486

(54) **METHOD AND APPARATUS FOR APPLYING FILE**
VERFAHREN UND VORRICHTUNG ZUR ANWENDUNG EINER DATEI
PROCÉDÉ ET APPAREIL POUR APPLIQUER UN FICHIER

(30) Priority: 15.05.2020 CN 202010414264; 26.02.2021 CN 202110217233
(43) Date of publication of application: 22.02.2023
(73) Proprietor: Huawei Technologies Co., Ltd., Shenzhen, Guangdong 518129 (CN)
(72) Inventor: SHAO, Mingming, Shenzhen, Guangdong 518129 (CN); ZHONG, Xiaofei, Shenzhen, Guangdong 518129 (CN); WANG, Jinbo, Shenzhen, Guangdong 518129 (CN)
(74) Representative: Thun, Clemens
(86) International application number: PCT/CN2021/089669
(87) International publication number: WO 2021/227847

(56) References cited:
- WO-A1-2019/061040
- WO-A1-2019/061040
- CN-A- 103 226 594
- CN-A- 107 229 389
- CN-A- 107 977 469
- CN-A- 109 164 964
- CN-A- 109 918 345
- CN-A- 110 333 814
- US-A1- 2016 294 839
- US-A1- 2020 218 694

## Description

### TECHNICAL FIELD

This application relates to the field of file display technologies, and in particular, to a file application method and apparatus.

### BACKGROUND

With the development of application technologies, a plurality of types of applications (applications, APPs) emerge. To meet diversified user requirements, a plurality of APPs are usually installed in a terminal device, and some of the APPs can obtain corresponding files. For example, a communication APP, for example, a mailbox installed in a terminal device may obtain a file, for example, a document or a picture sent by another terminal device.

After obtaining the file, a user usually needs to apply the file, for example, view content of the file, or transmit the file. Currently, to meet a requirement of the user to apply the file, usually, the following methods are used. In a first method, a file manager in the terminal device divides files of various APPs into different file groups based on features of the files, for example, divides picture files into a same file group, and displays file groups in the file manager. Then, after receiving a selection operation on a file group, the file manager displays each file in the file group, so that the user can search for and apply the file. A storage path of an APP usually includes files of the APP. In a second method, the user may enter the storage path of the APP, search the storage path for a file to be applied, and apply the file after finding the file.

However, in the foregoing first method, one file group usually includes a plurality of files, and in the second method, the storage path of the APP usually includes a plurality of files of the APP. According to the foregoing two methods, when the user needs to apply one of the files, the user usually needs to search the plurality of files in sequence to find the file needed by the user. File search efficiency is low. The file can be applied only after the file is found. Low search efficiency results in low file application efficiency. Consequently, in the conventional technology, there is a problem that efficiency of applying a file is low.

WO 2019/061040 Al discloses a file management method and an apparatus. A terminal displays an interface of a first application, stores a target file received through the first application, and extracts related information of the target file, where the related information of the target file includes file feature information, and the file feature information includes a name of the target file; the terminal searches for a storage path of the target file in storage space of the terminal based on the related information of the target file, and displays a control used for performing file management on the target file if the storage path of the target file is successfully found.

### SUMMARY

To resolve a problem of low file application efficiency in the conventional technology, embodiments of this application provide a file application method and apparatus.

The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

According to a first aspect, an embodiment of this application discloses a file application method, including:

A first terminal device receives a first operation on a first file, where the first operation is used to process the first file;
the first terminal device displays a first floating icon of the first file; and
after receiving a second operation on the first floating icon, the first terminal device applies the first file based on the second operation.

According to the solutions provided in this embodiment of this application, if the first file is to be applied, an operation is directly performed on the first floating icon of the first file, and a user does not need to search for the first file. Therefore, applying a file by using the solutions provided in this embodiment of this application can avoid impact of low file search efficiency in the conventional technology, to improve file application efficiency.

In an optional design, the second operation is used to indicate to display the first file. That the first terminal device applies the first file based on the second operation includes:

The first terminal device opens and displays the first file.

According to the foregoing steps, the first terminal device may open and display the first file based on an operation performed on the first floating icon, to implement quick display of the first file.

In an optional design, the second operation is used to indicate to share the first file with a second application APP, the first file is a file of a first APP, and the first APP and the second APP are APPs installed in the first terminal device.

That the first terminal device applies the first file based on the second operation includes:

The first terminal device shares the first file with the second APP.

According to the foregoing steps, the first file may be shared with the second APP of the terminal device, and there is no need to search for the first file. Therefore, efficiency of sharing a file with different APPs in a same terminal device can be improved.

In an optional design, a third APP of a second terminal device is displayed in a sharing window of the first terminal device, and the second operation is used to indicate to share the first file with the third APP.

That the first terminal device applies the first file based on the second operation includes:

The first terminal device transmits a first instruction and the first file to the second terminal device, where the first instruction is used to instruct to share the first file with the third APP.

According to the foregoing steps, the first file may be shared with the second terminal device, and there is no need to search for the first file. Therefore, efficiency of sharing a file with another terminal device can be improved.

In an optional design, the method further includes:

The first terminal device receives a third operation on a second floating icon in the sharing window, where the second floating icon is an icon of a second file of a third terminal device, and the third operation is used to indicate to share the second file in a fourth APP of the first terminal device;
the first terminal device transmits a second instruction to the third terminal device based on the third operation, where the second instruction is used to instruct to share the second file with the first terminal device; and
after receiving the second file, the first terminal device shares the second file in the fourth APP.

According to the foregoing steps, the first terminal device can obtain and share the second file transmitted by the third terminal device, without searching for the second file. Therefore, efficiency of obtaining, by the first terminal device, a file shared by another terminal device can be improved in the solutions provided in this embodiment of this application.

In an optional design, before the first terminal device displays the first floating icon of the first file, the method further includes:

The first terminal device determines that the first APP is a target APP, where the first file is a file of the first APP, and a file of the target APP includes an editable file; and
after determining that the first APP is a target APP, the first terminal device determines, by monitoring a processing status of the first file, that processing on the first file is completed.

According to the foregoing steps, only a processing status of the target APP is monitored, so that the first terminal device does not need to monitor files of all APPs. This effectively reduces running load of the first terminal device and improves running stability of the first terminal device.

In an optional design, that the first terminal device determines that the first APP is a target APP includes:

The first terminal device determines information about the first APP based on an installation package of the first APP; and
when the information about the first APP indicates that a file of the first APP includes an editable file, or when the information about the first APP indicates that the first APP is an APP included in a target application list, the first terminal device determines that the first APP is a target APP, where the target application list includes at least one target APP.

In an optional design, the method further includes:
after processing on the first file is completed, storing a processed first file in a database.

That the first terminal device applies the first file based on the second operation includes:

The first terminal device applies the first file in the database.

In an optional design, the method further includes:

After receiving a fourth operation on the first floating icon, and/or if no second operation on the first floating icon is received within a first time period, the first terminal device terminates display of the first floating icon.

According to a second aspect, an embodiment of this application discloses a file application method, including:

A second terminal device receives a first instruction and a first file that are transmitted by a first terminal device, where a third APP of the second terminal device is displayed in a sharing window of the first terminal device, and the first instruction is used to instruct to share the first file with the third APP; and
the second terminal device shares the first file with the third APP according to the first instruction.

According to a third aspect, an embodiment of this application discloses a file application method, including:

A third terminal device displays a second floating icon of a second file;
the third terminal device receives a second instruction transmitted by a first terminal device, where the second floating icon is displayed in a sharing window of the first terminal device, and the second instruction is used to instruct to share the second file with the first terminal device; and
the third terminal device transmits the second file to the first terminal device according to the second instruction.

According to a fourth aspect, an embodiment of this application discloses a file application apparatus, including:
a processor and a transceiver interface.

The transceiver interface is configured to receive a first operation on a first file, and the first operation is used to process the first file.

The processor is configured to: display a first floating icon of the first file, and after a second operation on the first floating icon is received, apply the first file based on the second operation.

In an optional design, the second operation is used to indicate to display the first file, and the processor is specifically configured to open and display the first file.

In an optional design, the second operation is used to indicate to share the first file with a second application APP, the first file is a file of a first APP, and the first APP and the second APP are APPs installed in the first terminal device.

The processor is specifically configured to share the first file with the second APP.

In an optional design, a third APP of a second terminal device is displayed in a sharing window of the first terminal device, and the second operation is used to indicate to share the first file with the third APP.

The processor is specifically configured to transmit a first instruction and the first file to the second terminal device. The first instruction is used to instruct to share the first file with the third APP.

In an optional design, the transceiver interface is further configured to receive a third operation on a second floating icon in the sharing window. The second floating icon is an icon of a second file of a third terminal device, and the third operation is used to indicate to share the second file in a fourth APP of the first terminal device.

The transceiver interface is further configured to transmit a second instruction to the third terminal device based on the third operation. The second instruction is used to instruct to share the second file with the first terminal device.

The processor is further configured to share the second file in the fourth APP after the second file is received.

In an optional design, the processor is further configured to: before the first terminal device displays the first floating icon of the first file, determine that the first APP is a target APP. The first file is a file of the first APP, and a file of the target APP includes an editable file.

The processor is further configured to: after it is determined that the first APP is a target APP, determine, by monitoring a processing status of the first file, that processing on the first file is completed.

In an optional design, the processor is specifically configured to: determine information about the first APP based on an installation package of the first APP, and when the information about the first APP indicates that a file of the first APP includes an editable file, or when the information about the first APP indicates that the first APP is an APP included in a target application list, determine that the first APP is a target APP, where the target application list includes at least one target APP.

In an optional design, the processor is further configured to store a processed first file in a database after processing on the first file is completed.

The processor is specifically configured to apply the first file in the database.

In an optional design, the processor is further configured to: after a fourth operation on the first floating icon is received, and/or if no second operation on the first floating icon is received within a first time period, terminate display of the first floating icon.

According to a fifth aspect, an embodiment of this application discloses a file application apparatus, including:
a processor and a transceiver interface.

The transceiver interface is configured to receive a first instruction and a first file that are transmitted by a first terminal device. A third APP of a second terminal device is displayed in a sharing window of the first terminal device, and the first instruction is used to instruct to share the first file with the third APP.

The processor is configured to share, by the device, the first file with the third APP according to the first instruction.

According to a sixth aspect, an embodiment of this application discloses a file application apparatus, including:
a processor and a transceiver interface.

The processor is configured to display a second floating icon of a second file.

The transceiver interface is configured to receive a second instruction transmitted by a first terminal device. The second floating icon is displayed in a sharing window of the first terminal device, and the second instruction is used to instruct to share the second file with the first terminal device.

The transceiver interface is further configured to transmit the second file to the first terminal device according to the second instruction.

According to a seventh aspect, an embodiment of this application discloses terminal apparatus, including: at least one processor and a memory.

The memory is configured to store program instructions.

The processor is configured to invoke and execute the program instructions stored in the memory, so that the terminal apparatus performs the file application method according to the first aspect.

According to an eighth aspect, an embodiment of this application discloses terminal apparatus, including: at least one processor and a memory.

The memory is configured to store program instructions.

The processor is configured to invoke and execute the program instructions stored in the memory, so that the terminal apparatus performs the file application method according to the second aspect.

According to a ninth aspect, an embodiment of this application discloses terminal apparatus, including: at least one processor and a memory.

The memory is configured to store program instructions.

The processor is configured to invoke and execute the program instructions stored in the memory, so that the terminal apparatus performs the file application method according to the third aspect.

According to a tenth aspect, an embodiment of this application discloses a computer-readable storage medium. The computer-readable storage medium stores instructions, and when the instructions are run on a computer, the computer is enabled to perform the file application method according to the first aspect.

According to an eleventh aspect, an embodiment of this application discloses a computer-readable storage medium. The computer-readable storage medium stores instructions, and when the instructions are run on a computer, the computer is enabled to perform the file application method according to the second aspect.

According to a twelfth aspect, an embodiment of this application discloses a computer-readable storage medium. The computer-readable storage medium stores instructions, and when the instructions are run on a computer, the computer is enabled to perform the file application method according to the third aspect.

According to a thirteenth aspect, an embodiment of this application discloses a computer-readable storage medium. The computer-readable storage medium stores instructions, and when the instructions are run on a computer, the computer is enabled to perform the file application method according to the first aspect.

According to a fourteenth aspect, an embodiment of this application discloses a computer-readable storage medium. The computer-readable storage medium stores instructions, and when the instructions are run on a computer, the computer is enabled to perform the file application method according to the second aspect.

According to a fifteenth aspect, an embodiment of this application discloses a computer-readable storage medium. The computer-readable storage medium stores instructions, and when the instructions are run on a computer, the computer is enabled to perform the file application method according to the third aspect.

According to the solutions provided in this embodiment of this application, the first floating icon of the first file can be displayed on a display interface of the first terminal device after processing on the first file is completed. In addition, after receiving the second operation on the first floating icon, the first terminal device applies the first file based on the second operation.

In this case, if the first file is to be applied, an operation is directly performed on the first floating icon of the first file, and the user does not need to search for the first file. Therefore, applying a file by using the solutions provided in this embodiment of this application can avoid impact of low file search efficiency in the conventional technology, to improve file application efficiency.

### BRIEF DESCRIPTION OF DRAWINGS

FIG. 1 is a schematic diagram of an interface of a terminal device;
FIG. 2 is a schematic diagram of a structure of a terminal device according to an embodiment of this application;
FIG. 3 is a schematic diagram of a structure of another terminal device according to an embodiment of this application;
FIG. 4 is a schematic block diagram of a software structure of a terminal device according to an embodiment of this application;
FIG. 5 is a schematic block diagram of another software structure of a terminal device according to an embodiment of this application;
FIG. 6 is a schematic diagram of a working procedure of a file application method according to an embodiment of this application;
FIG. 7(a) is a schematic diagram of a first floating icon according to an embodiment of this application;
FIG. 7(b) is a schematic diagram of another first floating icon according to an embodiment of this application;
FIG. 8(a) is a schematic diagram of another interface of a terminal device according to an embodiment of this application;
FIG. 8(b) is a schematic diagram of a communication interface according to an embodiment of this application;
FIG. 8(c) is a schematic diagram of an interface on which a first file is shared according to an embodiment of this application;
FIG. 9(a) is a schematic diagram of still another interface of a terminal device according to an embodiment of this application;
FIG. 9(b) is a schematic diagram of another interface in which a first file is shared according to an embodiment of this application;
FIG. 10 is a schematic diagram of a working procedure of another file application method according to an embodiment of this application;
FIG. 11(a) is a schematic diagram of yet another interface of a terminal device according to an embodiment of this application;
FIG. 11(b) is a schematic diagram of an interface in which a second file is shared according to an embodiment of this application;
FIG. 12 is a schematic diagram of a working procedure of still another file application method according to an embodiment of this application;
FIG. 13 is a schematic diagram of a working procedure of yet another file application method according to an embodiment of this application;
FIG. 14 is a schematic diagram of a working procedure of yet still another file application method according to an embodiment of this application;
FIG. 15 is a schematic diagram of a working procedure of a further file application method according to an embodiment of this application;
FIG. 16 is a schematic diagram of a structure of a file application apparatus according to an embodiment of this application; and
FIG. 17 is a schematic diagram of a structure of a terminal apparatus according to an embodiment of this application.

### DESCRIPTION OF EMBODIMENTS

The following describes the technical solutions in embodiments of this application with reference to the accompanying drawings in embodiments of this application.

In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The following terms "first" and "second" are merely intended for a purpose of description. In the descriptions of embodiments of this application, "a plurality of" means two or more than two unless otherwise specified.

For clear and brief description of the following embodiments, a related technology is briefly described first.

To meet diversified use requirements of a user, a plurality of APPs are usually installed in a terminal device, and different APPs are used to implement different functions. Some APPs can obtain corresponding files. For example, a communication APP, for example, a mailbox installed in a terminal device may obtain a file, for example, a document or a picture sent by another terminal device, and an office APP may generate a file, for example, a text file or a table based on a received operation.

After a file is obtained, the user sometimes needs to apply the file. For example, the user sometimes needs to view content of the file, or the user sometimes needs to transmit the file to another terminal device through a communication APP. Currently, to meet a requirement of the user to apply the file, usually, the following methods are used: In a first method, a file manager is disposed in the terminal device, and the file manager divides files of APPs into corresponding file groups based on features of the files of the APPs, and displays each file group. After receiving a selection operation for one of file groups, the file manager displays each file in the file group, so that the user searches for a file that the user needs to apply, and after finding the file that the user needs to apply, the user may perform a corresponding operation on the file to apply the file.

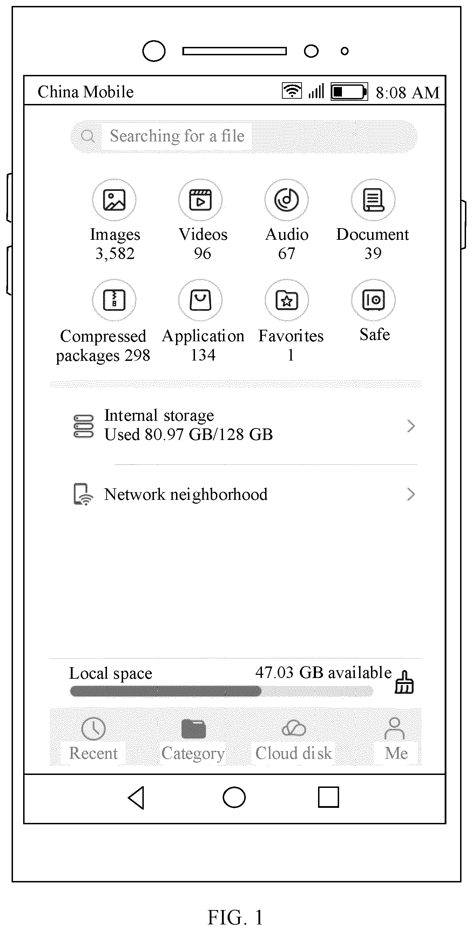

For example, refer to a schematic diagram of an interface shown in FIG. 1. A feature of a file may be a type of the file. The file manager may divide files of APPs into a plurality of file groups based on types of the files (for example, picture, video, audio, or document). Types of files included in one file group are the same. If query person needs to apply a file, the query person opens a file group in which the file is located, search for the to-be-applied file, and then perform a corresponding operation on the file.

For example, in FIG. 1, the plurality of file groups obtained through division of the file manager include a file group of pictures, a file group of videos, a file group of audios, a file group of documents, and the like. The file group of pictures includes picture files of APPs, the file group of videos includes video files of APPs, and the file group of audios includes audio files of APPs. In addition, in this example, if an image file is to be applied, the file group of pictures is opened, and the to-be-applied image file is searched for.

However, in this method, one file group usually includes a plurality of files. In addition, with use of the terminal device, files of APPs in the terminal device increase, and a quantity of files included in each file group also increases. Therefore, if one of the files needs to be viewed, it is usually necessary to sequentially search a plurality of files in a file group to determine the file required by the user. This results in low file search efficiency.

For example, in the foregoing method, files in each file group are usually arranged according to a specific rule, and the rule may be modification time of the files, sizes of the files, or the like. If the rule is the modification time of the files, in each file group, a file with later modification time is usually ranked higher. In this case, if a file that needs to be searched for is not modified in a period of time, the file is ranked lower. The query person may first view a file that is ranked higher in the file group, and then find the file required by the query person in the file group. Therefore, long search time is required, resulting in low file search efficiency. In addition, if the rule is that the files are arranged in descending order of the sizes of the files, and the query person searches for a file with a small size, the file is ranked lower. Similarly, the query person needs to first view a file that is ranked higher in the file group, and then find the file required by the query person. This also consumes long search time.

In a second method, the user may further view a storage path of the APP, and search the storage path for a file of the APP. However, the storage path of the APP usually includes a plurality of files of the APP. When this method is used, if a file needs to be viewed, the query person needs to sequentially search the plurality of files in the storage path, to find the file required by the query person.

Therefore, when a file is applied by using the conventional technology, it usually takes a lot of time to search for the file, that is, the conventional technology has a problem of low file search efficiency. However, in the conventional technology, the file can be applied only after the file is found, and low file search efficiency results in low file application efficiency. As a result, in the conventional technology, a problem of low file application efficiency exists.

To resolve the problem of low file application efficiency in the conventional technology, embodiments of this application provide a file application method and apparatus. The following describes implementations of embodiments of this application in detail with reference to accompanying drawings.

The file application method provided in embodiments of this application may be applied to a plurality of terminal devices. In some embodiments, the terminal device may be a terminal device on which an APP can be installed, for example, a mobile phone, a tablet computer, a desktop computer, a laptop computer, a notebook computer, an ultra-mobile personal computer (Ultra-mobile Personal Computer, UMPC), a handheld computer, or a netbook. A specific form of the terminal device is not specially limited in this application.

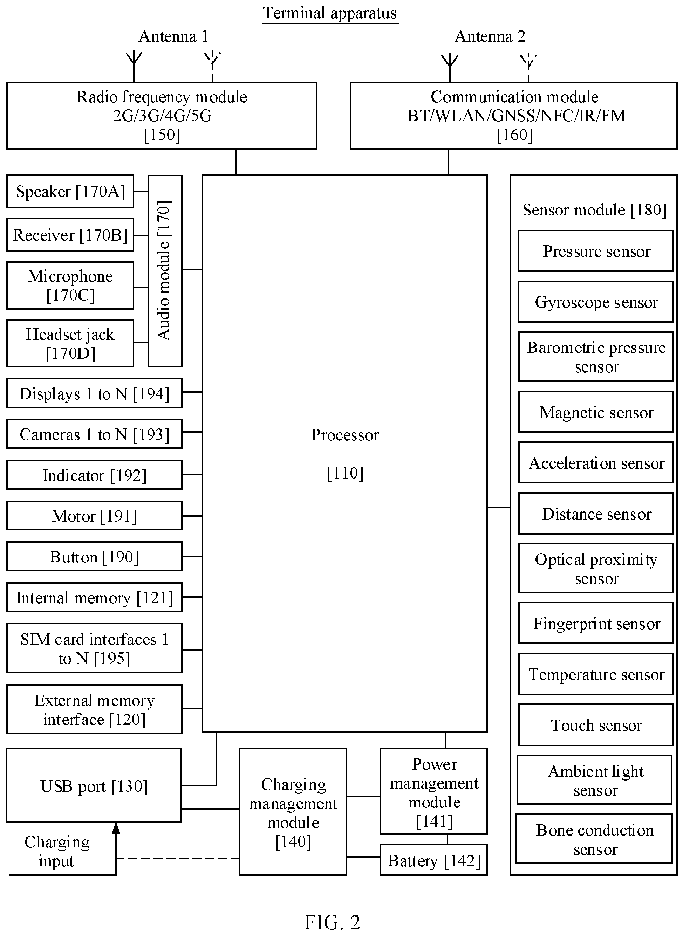

For example, the terminal device is a smartphone. A schematic diagram of a structure of the terminal device may be shown in FIG. 2. Refer to FIG. 2. The terminal device may include a processor 110, an external memory interface 120, an internal memory 121, a universal serial bus (universal serial bus, USB) interface 130, a charging management module 140, a power management module 141, a battery 142, an antenna 1, an antenna 2, a radio frequency module 150, a communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

It may be understood that the structure shown in this embodiment of this application does not constitute a specific limitation on the mobile phone. In some other embodiments of this application, the mobile phone may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate devices, or may be integrated into one or more processors.

The controller may be a nerve center and a command center of the mobile phone. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instruction or the data again, the processor may directly invoke the instructions or the data from the memory. This avoids repeated access and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the mobile phone.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the communications module 160 through the I2S interface, to implement a function of answering a call by using a Bluetooth headset.

The PCM interface may also be used to perform audio communication, and sample, quantize, and code an analog signal. In some embodiments, the audio module 170 may be coupled to the communication module 160 through a PCM bus interface. In some embodiments, the audio module 170 may also transmit an audio signal to the communication module 160 through the PCM interface, to implement a function of answering a call by using a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 and the communications module 160. For example, the processor 110 communicates with a Bluetooth module in the communication module 160 through the UART interface, to implement a Bluetooth function. In some embodiments, the audio module 170 may transmit an audio signal to the communication module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the mobile phone. The processor 110 communicates with the display screen 194 through the DSI interface, to implement a display function of the mobile phone.

The GPIO interface may be configured by software. The GPIO interface may be configured as a control signal or a data signal. In some embodiments, the GPIO interface may be configured to connect the processor 110 and the camera 193, the display screen 194, the communication module 160, the audio module 170, the sensor module 180, or the like. The GPIO interface may alternatively be configured as an I2C interface, an I2S interface, a UART interface, an MIPI interface, or the like.

The USB port 130 is an interface that conforms to a USB standard specification, and may be specifically a mini USB port, a micro USB port, a USB type-C port, or the like. The USB port 130 may be configured to connect to a charger to charge the mobile phone, or may be configured to transmit data between the mobile phone and a peripheral device, or may be configured to connect to a headset for playing audio through the headset. The port may alternatively be used to connect to another terminal device, for example, an AR device.

It may be understood that an interface connection relationship between the modules shown in this embodiment of this application is merely an example for description, and does not constitute a limitation on the structure of the mobile phone. In some other embodiments of this application, the mobile phone may alternatively use an interface connection manner different from that in the foregoing embodiments, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive wireless charging input by using a wireless charging coil of the mobile phone. When charging the battery 142, the charging management module 140 may further supply power to the terminal device by using the power management module 141.

The power management module 141 is configured to connect to the battery 142 and the charging management module 140 to the processor 110. The power management module 141 receives an input of the battery 142 and/or the charging management module 140, and supplies power to the processor 110, the internal memory 121, an external memory, the display 194, the camera 193, the communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the mobile phone may be implemented by using the antenna 1, the antenna 2, the radio frequency module 150, the communication module 160, the modem processor, the baseband processor, and the like.

The antenna 1 and the antenna 2 are configured to transmit and receive an electromagnetic wave signal. Each antenna in the mobile phone may be configured to cover one or more communication bands. Different antennas may be further multiplexed, to improve antenna utilization. For example, the antenna 1 may be multiplexed as a diversity antenna of a wireless local area network. In other embodiments, the antenna may be used in combination with a tuning switch.

The radio frequency module 150 may provide a wireless communication solution that is applied to the mobile phone and that includes 2G/3G/4G/5G. The radio frequency module 150 may include at least one filter, a switch, a power amplifier, a low noise amplifier (low noise amplifier, LNA), and the like. The radio frequency module 150 may receive an electromagnetic wave through the antenna 1, perform processing such as filtering or amplification on the received electromagnetic wave, and transfer the electromagnetic wave to the modem processor for demodulation. The radio frequency module 150 may further amplify a signal modulated by the modem processor, and convert the signal into an electromagnetic wave for radiation through the antenna 1. In some embodiments, at least some function modules in the radio frequency module 150 may be disposed in the processor 110. In some embodiments, at least some function modules in the radio frequency module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the radio frequency module 150 or another function module.

The communications module 160 may provide a wireless communication solution that is applied to the mobile phone and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The communication module 160 may be one or more components integrating at least one communication processor module. The communication module 160 receives an electromagnetic wave through the antenna 2, performs frequency modulation and filtering processing on an electromagnetic wave signal, and sends a processed signal to the processor 110. The communication module 160 may further receive a to-be-sent signal from the processor 110, perform frequency modulation and amplification on the signal, and convert the signal into an electromagnetic wave for radiation through the antenna 2.

In some embodiments, the antenna 1 and the radio frequency module 150 of the mobile phone are coupled, and the antenna 2 and the communication module 160 of the mobile phone are coupled, so that the mobile phone can communicate with a network and another device by using a wireless communication technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The mobile phone implements a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information. In this embodiment of this application, the display 194 may include a display and a touch panel. The display is configured to output display content to a user, and the touch panel is configured to receive a touch event input by the user on the display 194.

In the mobile phone, the sensor module 180 may include one or more of a gyroscope, an acceleration sensor, a pressure sensor, a barometric pressure sensor, a magnetic sensor (for example, a Hall effect sensor), a distance sensor, an optical proximity sensor, a fingerprint sensor, a temperature sensor, a touch sensor, a pyroelectric infrared sensor, an ambient light sensor, or a bone conduction sensor. This is not limited in this embodiment of this application.

The mobile phone may implement an image shooting function by using the ISP, the camera 193, the video codec, the GPU, the flexible display, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the mobile phone may include one or N cameras 193, where N is a positive integer greater than 1.

The digital signal processor is configured to process a digital signal, and may process another digital signal in addition to the digital image signal. For example, when the mobile phone selects a frequency, the digital signal processor is configured to perform Fourier transform on frequency energy, and the like.

The video codec is configured to compress or decompress a digital video. The mobile phone may support one or more video codecs. In this way, the mobile phone can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. Applications such as intelligent cognition of the mobile phone, such as image recognition, facial recognition, speech recognition, and text understanding, can be implemented by using the NPU.

The external memory interface 120 may be configured to connect to an external memory card, for example, a micro SD card, to extend a storage capability of the mobile phone. The external memory card communicates with the processor 110 through the external memory interface 120, to implement a data storage function. For example, files such as music and videos are stored in the external storage card.

The internal memory 121 may be configured to store computer executable program code. The executable program code includes instructions. The processor 110 runs the instructions stored in the internal memory 121, to perform various function applications of the mobile phone and data processing. The internal memory 121 may include a program storage area and a data storage area. The program storage area may store an operating system, an application required by at least one function (for example, a voice playing function or an image playing function), and the like. The data storage area may store data (for example, audio data or an address book) created during use of the mobile phone, and the like. In addition, the internal memory 121 may include a high-speed random access memory, or may include a nonvolatile memory, for example, at least one magnetic disk storage device, a flash memory, or a universal flash storage (universal flash storage, UFS).

The mobile phone may implement an audio function, for example, network standard determining or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "horn", is configured to convert an electrical audio signal into a sound signal. The mobile phone may be used to listen to music or answer a hands-free call by using the speaker 170A.

The receiver 170B, also referred to as an "earpiece", is configured to convert an electrical audio signal into a sound signal. When a call is answered or voice information is received by using the mobile phone, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the mobile phone. In some other embodiments, two microphones 170C may be disposed in the mobile phone, to collect a sound signal and further implement a noise reduction function. In some other embodiments, three, four, or more microphones 170C may alternatively be disposed in the mobile phone, to collect a sound signal, reduce noise, identify a sound source, implement a directional recording function, and the like.

The headset jack 170D is configured to connect to a wired headset. The headset jack 170D may be the USB port 130, or may be a 3.5 mm open mobile terminal platform (open mobile terminal platform, OMTP) standard interface or Cellular Telecommunications Industry Association of the USA (Cellular Telecommunications Industry Association of the USA, CTIA) standard interface.

The button 190 includes a power button, a volume button, and the like. The button 190 may be a mechanical button, or may be a touch-sensitive button. The mobile phone receives a button input, and generates a button signal input related to a user setting and function control of the mobile phone.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the flexible display. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the mobile phone. The mobile phone may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The mobile phone interacts with a network by using the SIM card, to implement functions such as calling and data communication. In some embodiments, the mobile phone uses an eSIM, namely, an embedded SIM card. The eSIM card may be embedded in the mobile phone, and cannot be separated from the mobile phone.

In addition, an operating system runs above the foregoing components, for example, an iOS operating system developed by Apple, an Android open-source operating system developed by Google, and a Windows operating system developed by Microsoft. An application may be installed and run on the operating system.

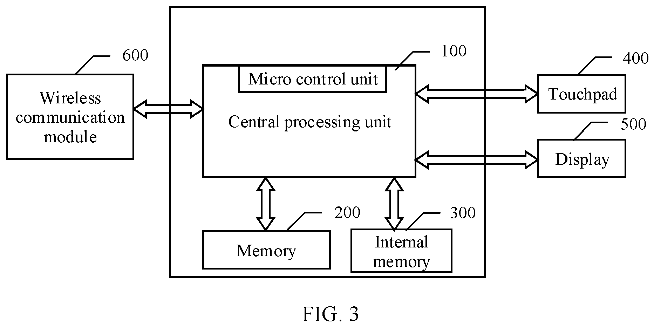

In another feasible implementation, for example, the terminal device is a smartphone. A schematic diagram of another structure of the terminal device may alternatively be shown in FIG. 3. Refer to FIG. 3. The terminal device includes a central processing unit (central processing unit, CPU) 100, a memory 200, an internal memory 300, a touchpad 400, a display 500, and a wireless communication module 600.

The central processing unit 100 is generally an operation and control core of the terminal device, and a microcontroller unit (microcontroller unit, MCU) may be built in the central processing unit 100. In this application, the terminal device may implement, under control of the central controller 100, the file application method provided in embodiments of this application.

The memory 200 and the internal memory 300 are separately connected to the central processing unit 100. The memory 200 may be memories in a plurality of forms. In a feasible implementation, the memory 200 may be a nonvolatile memory.

In addition, in the solutions provided in embodiments of this application, the memory 200 may be configured to store files of APPs in the terminal device, and the like.

The touchpad 400 is configured to implement interaction between a user and the terminal device. If the user needs to control the terminal device, the user may touch a corresponding location on the touchpad 400. The terminal device determines the touch location on the touchpad 400, and completes a corresponding function based on the touch location, to implement human-machine interaction.

The display 500 may display corresponding content based on an operation performed by the user on the terminal device. In the solutions provided in embodiments of this application, the display 500 may display each APP installed in the terminal device, and may further display a file of the APP based on an operation.

In addition, the terminal device implements wireless communication with another terminal device by using the wireless communications module 600. The wireless communication module 600 may be a Bluetooth communication module, a wireless broadband communication module, a Near Field Communication (near field communication, NFC) module, or the like. This is not limited in embodiments of this application.

Certainly, the terminal device may alternatively use a structure in another form. This is not limited in embodiments of this application.

To clarify functional operations performed by each software architecture in the terminal device when the terminal device performs the solutions disclosed in this application, embodiments of this application further disclose a software structure of the terminal device.

The operating system of the terminal device may use a layered architecture, an event-driven architecture, a microkernel architecture, a micro service architecture, a cloud architecture, or the like. In embodiments of this application, an Android system with a layered architecture is used as an example to describe the software structure of the terminal device.

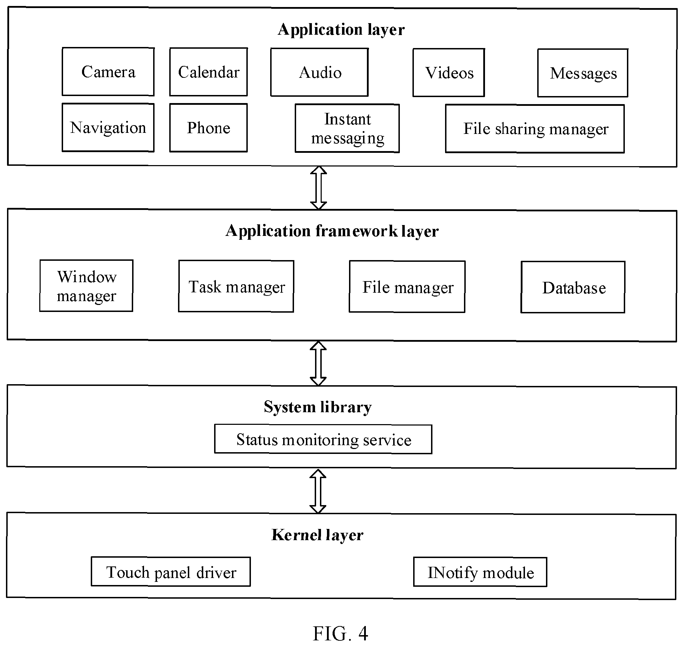

FIG. 4 is a schematic block diagram of a software structure of the terminal device according to an embodiment of this application.

In a hierarchical architecture, software of the terminal device is divided into several layers, and each layer has a clear role and task. The layers communicate with each other through a software interface. In some embodiments, an Android system is divided into four layers: an application layer, an application framework layer, a system library, and a kernel layer from top to bottom.

The application layer may include Android application packages (Android application packages, APKs) of a series of applications (applications, APPs). For example, the application layer may include APKs of APPs such as Phone, Navigation, Music, Videos, and Instant messaging. The APP may include an APP that is installed on the terminal device by default at delivery, and may further include an APP installed by the user in a process of using the terminal device.

In addition, the application layer further includes a system user interface (that is, a system UI) module. The system UI is used to manage a user interface of the terminal device, and may provide display of status bar information (such as a remaining battery power and a display identifier, for example, a Wi-Fi signal or 3G/4G), notification panel display, a screen capturing service, a wallpaper service, and the like. In addition, in this application, the system UI may display the file of the APP on the display interface of the terminal device based on the received operation.

Further, in this embodiment of this application, the application layer further includes a file sharing manager (file sharing manager). The file sharing manager may listen to an operation event for a file. The operation event may include events such as creating the file, opening the file, and modifying the file. In addition, the file sharing manager may further determine, based on parsing of the operation event, a change of the file, and refresh, based on the change of the file, a database storing the file, so that the database stores a changed file.

In addition, after an operation on the file is completed, the file sharing manager may further generate a floating icon of the file and display the floating icon of the file. In addition, the file sharing manager may further respond to various operations such as dragging and tapping on the floating icon, and perform corresponding application processing on the file based on the operations on the floating icon.

The application framework layer provides an application programming interface (application programming interface, API) and a programming framework for an application at the application layer. The application framework layer includes some predefined functions. As shown in FIG. 4, the application framework layer may include a window manager, a task manager, a file manager, a database, and the like.

The window manager is used to manage a window program, and the task manager is used to determine related information of each program and process that are run in the terminal device. In addition, the database stores files of APPs installed in the terminal device. The file manager may be used to listen to operations such as access, creation, modification, deletion, and movement of a file or folder, and interact with the file sharing manager based on a detected event, so that the file sharing manager performs a corresponding operation.

In addition, the file manager may alternatively listen to a file or a folder based on an INotify mechanism. INotify is a kernel feature of Linux, and can monitor a file system and report a related event alarm to a dedicated application timely.

The system library includes a status monitoring service, and the status monitoring service may perform status detection based on data reported by a sensor driver at the kernel layer.

The kernel layer is a layer between hardware and software. The kernel layer includes a driver and the like, and the driver may include a touch panel (touch panel, TP) driver. In addition, if the file manager listens to a file or a folder based on the INotify mechanism, an INotify module may be further disposed at the kernel layer.

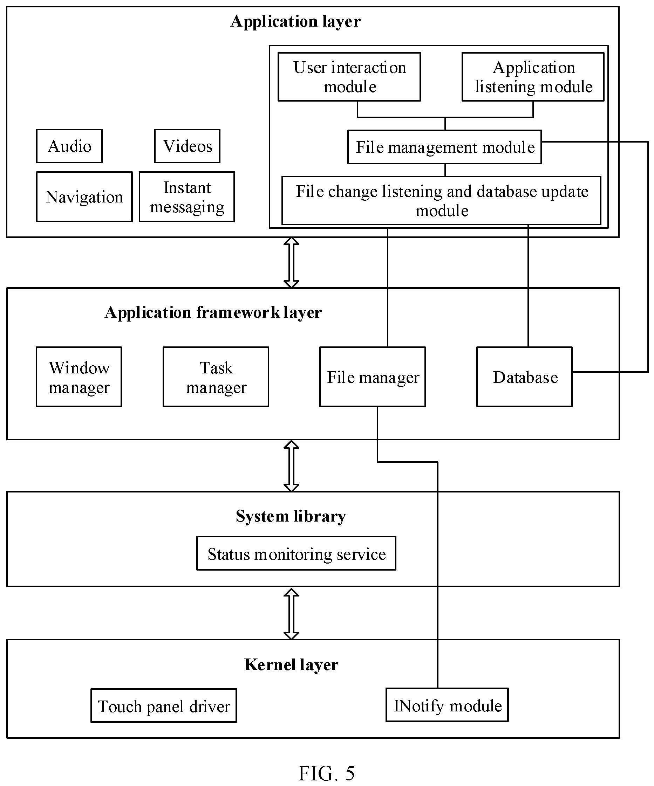

Further, refer to a schematic diagram shown in FIG. 5. In the solutions provided in this embodiment of this application, the file sharing manager may be further divided into a user interaction module, an application listening module, a file management module, and a file change listening and database update module.

The user interaction module may be used to respond to an operation received by the terminal device. For example, after the terminal device receives an operation on a file and completes processing on the file based on the operation, the user interaction module may display a floating icon of the file on the display of the terminal device. When no operation on the file is received within a period of time, the user interaction module may remove the floating icon, so that the floating icon is no longer displayed on the display.

The application listening module is used to listen to an event of an APP installed in the terminal device. The APP listened by the application listening module usually includes an APP whose file is editable, and the listened event usually includes an event, for example, opening, saving, saving as, and/or closing of a file of the APP.

The file change listening and database update module may interact with the database storing the file. When the application listening module detects that an event, for example, opening, saving, saving as, and/or closing of a file of an APP, the file change listening and database update module may listen to a change of the file of the APP.

The file management module is connected to the user interaction module, the application listening module, and the file change listening and database updating module. The file management module may provide a corresponding response policy for the user interaction module. For example, after the file change listening and database update module determines that a file is changed, the file management module may generate a floating icon of the file, and enable the user interaction module to display the floating icon. In addition, after the file change listening and database update module determines, based on a detected result, that the file of the APP is changed, the file management module refreshes, based on a change of the file, the database storing the file, so that the database stores a changed file.

It should be noted that, although embodiments of this application are described by using the Android system as an example, a basic principle in embodiments is also applicable to a terminal device based on an operating system, for example, iOS or Windows.

If a software architecture of the terminal device to which the file application method provided in embodiments of this application is applied is shown in FIG. 5, in an example, the file manager in the terminal device may listen to a file or a folder based on an INotify mechanism, and transmit a detected event to the file sharing manager. In addition, the application listening module in the file sharing manager may also listen to the file of the APP, and transmit a detected event to the file change listening and database update module by using the file management module in the file sharing manager. The file change listening and database update module in the file sharing manager may determine a change of the file based on interaction with the file management module and the file manager, and refresh the database based on the change of the file, so that the database stores a changed file.

In addition, after determining that processing on a file is completed, the file management module in the file sharing manager may generate a floating icon of the file, and the user interaction module in the file sharing manager displays the floating icon on the display of the terminal device. If the user interaction module does not sense an operation of the user on the file within a period of time, or the terminal device receives an operation of no longer displaying the floating icon, the user interaction module may control the display to no longer display the floating icon of the file.

In a process of displaying the floating icon, if the user interaction module determines that the terminal device receives the operation on the floating icon, the user interaction module interacts with the file management module. The file management module determines the file corresponding to the floating icon from the database based on interaction with the user interaction module, and performs corresponding application processing, for example, opening and displaying content of the file, or transmitting the file to another APP, on the determined file based on a received operation on the floating icon.

Certainly, the modules in the terminal device may further perform other functions, and implement, through interaction between the modules, the file application method provided in this application. This is not limited in this application.

To resolve a problem of low file application efficiency in the conventional technology, embodiments of this application provide a file application method and apparatus.

To clarify the solutions provided in this application, the following describes the solutions provided in this application by using embodiments with reference to the accompanying drawings.

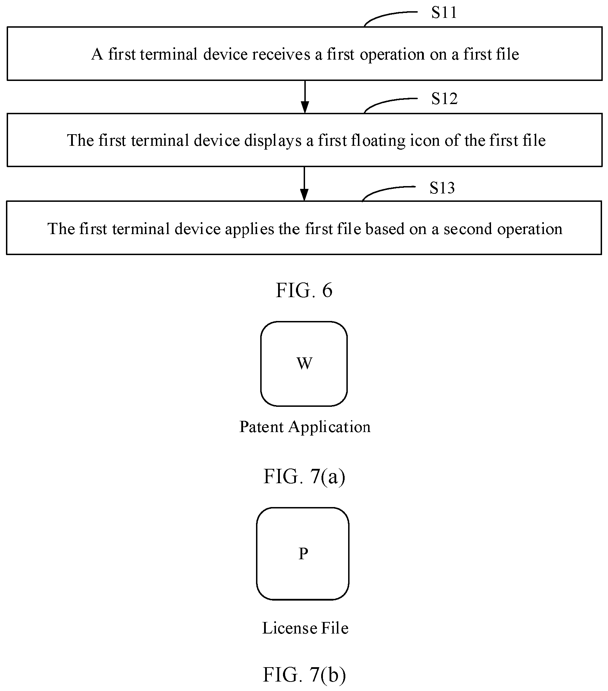

Refer to a schematic diagram of a working procedure shown in FIG. 6. An embodiment of this application discloses a file application method. The method includes the following steps.

Step S11: A first terminal device receives a first operation on a first file.

The first operation is used to process the first file, and the processing may include a plurality of forms. For example, the processing on the first file may include creating the first file, opening the first file, compressing the first file, and/or modifying the first file. Correspondingly, the first operation may also be in a plurality of forms.

In addition, the first operation may include an operation performed by a user on the first terminal device. For example, the first operation may include a touch operation performed by the user on a touchpad of the first terminal device, or may include an operation performed on the first file by using a mouse, a physical keyboard, and/or a virtual keyboard of the first terminal device. This is not limited in this embodiment of this application.

Step S12: The first terminal device displays a first floating icon of the first file.

After receiving the first operation, the first terminal device performs corresponding processing, for example, creating the first file, opening the first file, or modifying the first file, on the first file in response to the first operation.

In addition, the first terminal device may generate the first floating icon of the first file, and the first terminal device may display the first floating icon of the first file on a display interface.

The first floating icon indicates information about the first file, and the information about the first file may include a name of the first file. In this case, the first floating icon may include the name of the first file. In addition, if the name of the first file includes a large quantity of characters, the first floating icon may include some characters in the name of the first file, or some characters included in the name of the first file may be collapsed.

Further, for different types of first files, first floating icons may also be different. In this case, a type of the first file may be determined based on the displayed first floating icon.

For example, FIG. 7(a) is a schematic diagram of a first floating icon. In the example shown in FIG. 7(a), a first file is a Microsoft Office Word (Microsoft Office Word) document, and a name of the document is set to "Patent Application". In this case, the first floating icon includes the name, and the first floating icon may include a character "W", so that it can be determined, based on the character, that a type of the first file is a Word document.

FIG. 7(b) is a schematic diagram of a first floating icon. In the example shown in FIG. 7(b), a type of a first file is a portable document format (portable document format, PDF) document. If a name of the document is set to "License File", the first floating icon includes the name, and the first floating icon may include a character "P", so that it can be determined, based on the character, that the type of the first file is a PDF document.

Certainly, the first floating icon may alternatively be in another form. This is not limited in this embodiment of this application.

In addition, the terminal device may further adjust transparency of the first floating icon based on the received operation, to improve viewing experience of the user in viewing the display interface of the terminal device.

Step S13: After receiving a second operation on the first floating icon, the first terminal device applies the first file based on the second operation.

In this embodiment of this application, the second operation on the first floating icon may be an operation such as tapping, double tapping, or dragging the first floating icon. Applying the first file may include displaying content of the first file, modifying the first file, sharing the first file with another APP or another terminal device, or the like. This is not limited in this embodiment of this application.

According to the solutions provided in this embodiment of this application, the first floating icon of the first file can be displayed on the display interface of the first terminal device after the first operation on the first file is received. In addition, after receiving the second operation on the first floating icon, the first terminal device applies the first file based on the second operation.

In this case, if the first file is to be applied, an operation is directly performed on the first floating icon of the first file, and the user does not need to search for the first file. Therefore, applying a file by using the solutions provided in this embodiment of this application can avoid impact of low file search efficiency in the conventional technology, to improve file application efficiency.

In this embodiment of this application, after receiving the first operation on the first file, the first terminal device processes the first file. The first operation may be in a plurality of forms.

In a feasible implementation, the first operation may include any operation on the first file, for example, opening the first file, modifying the first file, closing the first file, or receiving the first file transmitted by a peer terminal device. In this solution, the first terminal device can display the first floating icon of the first file provided that an operation on the first file is received. In this way, the user does not need to search for the first file, and requirements of applying various first files are met.

Alternatively, in another feasible implementation, the first operation is an operation that changes the first file. The operation that changes the first file may include an operation of modifying the first file, an operation of obtaining the first file, or the like. This is not limited in this embodiment of this application.

Usually, after the first file changes, a probability of applying the first file increases. Therefore, in this implementation, the first terminal device displays the first floating icon only when the first file changes. This avoids displaying a large quantity of floating icons on the display interface of the terminal device, and further avoids impact on viewing other content on the display interface by the user.

Alternatively, a specific type of operation may be set. If a received operation on the first file is the specific type of operation, the operation is the first operation. Correspondingly, after receiving the specific operation on the first file, the first terminal device displays the first floating icon. In this case, the specific operation type may be set according to a user's file application requirement. The first terminal device displays the first floating icon only when the received operation is of the specific operation type. This avoids displaying a large quantity of floating icons on the display interface of the terminal device, and further avoids impact on viewing other content on the display interface by the user.

For example, usually, when a file needs to be transmitted, to reduce occupation of network resources and improve file transmit efficiency, compression processing is performed on the file before transmission, to transmit a compressed file. Therefore, it may be set that the first operation includes a compression operation on a file. In this case, if a compression operation on the first file is received, it may be determined that the operation is the first operation, and the first floating icon of the first file is displayed, so that a transmission operation on the first file is quickly completed by using the first floating icon.

In addition, in this embodiment of this application, the first operation may include a plurality of types of operations. If a plurality of first operations on a same first file are continuously received within a period of time, only one first floating icon of the first file needs to be displayed, to avoid a case in which a plurality of first floating icons of the same first file are simultaneously displayed on the display interface of the terminal device, which affects a display effect of the display interface.

In the foregoing embodiment, a case is provided in which after the second operation on the first floating icon is received, the first terminal device performs an operation of applying the first file based on the first operation. To meet diversified application requirements, a plurality of types of application may alternatively be performed on the first file based on different second operations.

In a feasible implementation, the second operation is used to indicate to display the first file. For example, the second operation may be a tap operation, a double-tap operation, a touch and hold operation, or the like on the first floating icon. Certainly, the second operation may alternatively be an operation in another form. This is not limited in this embodiment of this application.

In this case, that the first terminal device applies the first file based on the second operation includes: The first terminal device opens and displays the first file. To be specific, after receiving the second operation, the first terminal device opens and displays the first file in response to the second operation, so that a user requirement of viewing the first file can be met.

In the conventional technology, if the user needs to view the first file, the user usually needs to perform the following operations.
(1) The user opens the file manager of the first terminal device, so that the file manager displays a plurality of file groups, where each file group includes files of a same type.
(2) The user determines, based on a type of the first file, a file group in which the first file is located, and performs an operation on the file group, so that the first terminal device that receives the operation opens the file group. In this case, the file manager displays each file included in the file group.
(3) The user searches for the first file in the files presented in the file group, and performs an operation on the found first file, so that the first terminal device that receives the operation opens the first file, and the first terminal device displays the first file.

Alternatively, if the first file is a file of a first APP, the user may enter a storage path of the first APP, search a plurality of files in the storage path for the first file, and then open the first file, so that the first terminal device displays the first file.

It can be learned from the foregoing descriptions of the conventional technology that, although the first terminal device can display the first file in the two methods in the conventional technology, operations are complex, and the user needs to spend a large amount of time in searching for the first file. As a result, file viewing efficiency is low.

In the solutions provided in this embodiment of this application, the first floating icon of the first file is displayed on the display interface of the first terminal device. If the user wants to view the first file, the user only needs to perform a corresponding operation on the first floating icon, and the first terminal device may open and display the first file based on the operation performed on the first floating icon, to implement quick display of the first file.

According to the solutions provided in this embodiment of this application, the first terminal device can display the first file, to meet a user's requirement of viewing the first file. In addition, compared with the conventional technology, the solutions provided in this embodiment of this application is simple, and the user does not need to spend a large amount of time in searching for the first file. This effectively improves efficiency of displaying the first file.

In another feasible implementation, the second operation is used to indicate to share the first file with a second application APP.

The first file is a file of a first APP, and the first APP and the second APP are APPs installed in the first terminal device.

Correspondingly, that the first terminal device applies the first file based on the second operation includes the following operations.

The first terminal device shares the first file with the second APP.

In this implementation, the second operation is used to indicate to share the first file with the second APP of the first terminal device. In this embodiment of this application, the second operation may be in a plurality of forms.

For example, the second operation may be a drag operation on the first floating icon. In this case, when an interface of the second APP is displayed on the display interface of the first terminal device, the second operation is dragging the first floating icon to a corresponding location on the interface of the second APP.

Alternatively, when an interface of the second APP is displayed on the display interface of the first terminal device, the second operation is a tap operation performed on the first floating icon and a tap operation performed on a corresponding location of the second APP, and a time interval between the two tap operations falls within a first time range.

Certainly, the second operation may alternatively be an operation in another form. This is not limited in this embodiment of this application.

In addition, in this embodiment of this application, the first APP and the second APP are APPs installed in the first terminal device. In an example, the first APP may be an APP that is installed in the first terminal device and used for downloading, and the second APP is an APP that is installed in the first terminal device and used for communication. After the first file is downloaded through the first APP, the user sometimes wants to share the first file with another user of the second APP. In this case, after receiving the second operation used to indicate to share the first file with the second APP, the first terminal device may share the first file with the second APP.

In the conventional technology, if a file of an APP in the terminal device needs to be shared with another APP, the file first needs to be searched for, and then an operation is performed on the found file, to share the file with the another APP in the terminal device. However, an existing file search solution is cumbersome, and the user does not need to spend a large amount of time. Therefore, by using the conventional technology, when the file is shared to the another APP in the terminal device, efficiency is low.

According to the solutions provided in this embodiment of this application, the first floating icon of the first file is displayed on the first terminal device, and only a corresponding second operation needs to be performed on the first floating icon. For example, the first floating icon is dragged to a location of an icon of the second APP, so that the first file can be shared with the second APP of the terminal device, and there is no need to search for the first file. Therefore, efficiency of sharing a file to different APPs in a same terminal device can be improved.

To specify a manner of sharing the first file with the second APP, this application discloses the following example.

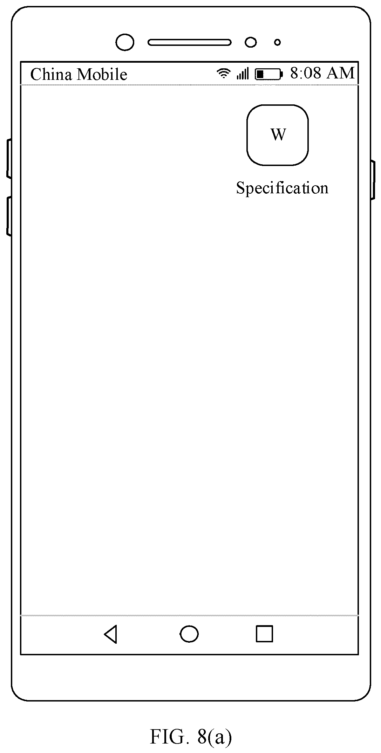

In this example, the first APP is a download APP, the first file is a text file downloaded through the first APP, and a name of the text file is "Specification". Refer to a schematic diagram shown in FIG. 8(a). After downloading is completed, a first floating icon of the first file is displayed on the display interface of the first terminal device, where the first floating icon includes the name of the text file.

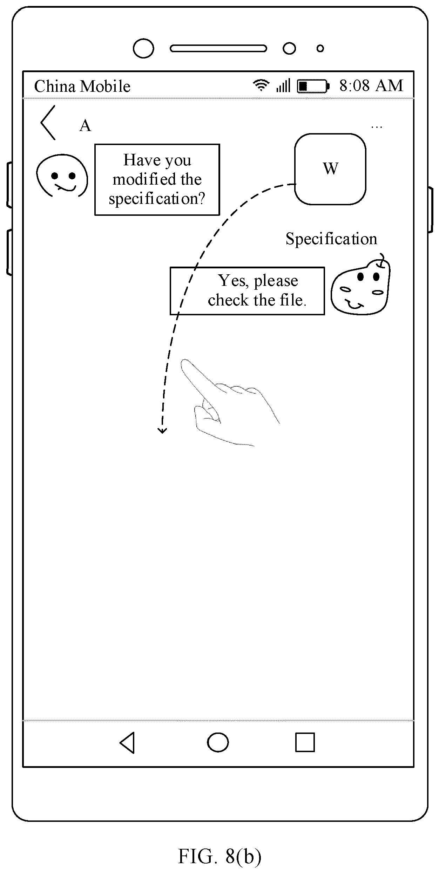

In addition, the second APP is an instant messaging APP. In this example, the first file needs to be shared with a user A. In this case, a communication interface between the user of the first terminal device and the user A in the second APP may be opened. FIG. 8(b) shows the communication interface. In addition, the first floating icon is displayed on the communication interface. The first terminal device may receive a second operation on the first floating icon, and the second operation may be dragging the first floating icon to the communication interface.

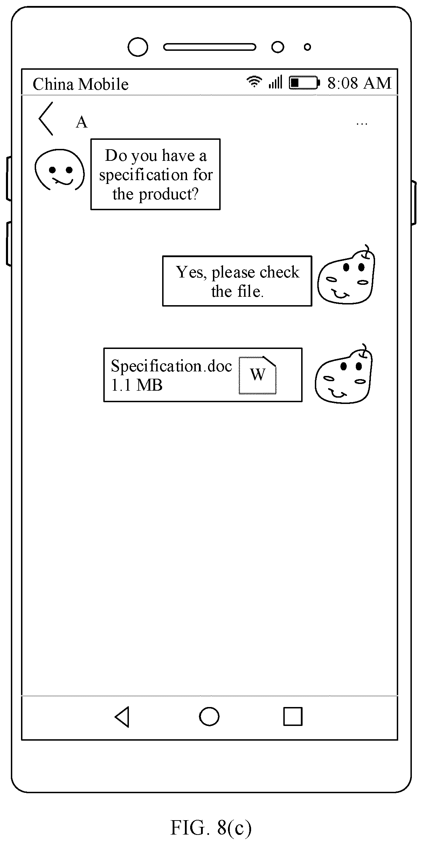

Refer to a schematic diagram shown in FIG. 8(c). After receiving the second operation, the first terminal device shares the first file with the second APP, so that the user A obtains the first file through the second APP.

According to the examples in FIG. 8(a) to FIG. 8(c), the first terminal device can share the first file with the second APP. In addition, in a sharing process, the first terminal device does not need to search for the first APP, and only the second operation needs to be performed on the first floating icon. This effectively improves efficiency of sharing the first file.

With the development of information interaction technologies, requirements for file sharing between different terminal devices are increasingly frequent. In the solutions provided in this embodiment of this application, the first terminal device may establish a network connection to a second terminal device, to implement file sharing.

In this case, the first terminal device may display a sharing window, and display an interface of the second terminal device in the sharing window. If the first file needs to be shared with a third APP of the second terminal device, a user of the second terminal device may perform an operation on the second terminal device, so that the second terminal device opens the third APP. Alternatively, the user of the first terminal device may enable, by performing an operation on the sharing window, the second terminal device to open the third APP, so that an interface of the third APP is displayed in the sharing window of the first terminal device.

In a feasible implementation, the third APP of the second terminal device is displayed in the sharing window of the first terminal device, and the second operation is used to indicate to share the first file with the third APP.

In this case, that the first terminal device applies the first file based on the second operation includes:

The first terminal device transmits a first instruction and the first file to the second terminal device, where the first instruction is used to instruct to share the first file with the third APP.

In this implementation, the first terminal device generates the corresponding first instruction based on the received second operation, and transmits the first instruction and the first file to the second terminal device through the network connection between the first terminal device and the second terminal device.

In addition, after receiving the first file and the first instruction, the second terminal device may transmit the received first file to the third APP according to an indication of the first instruction, to share the first file with the third APP.

The second operation may be in a plurality of forms. For example, when the third APP of the second terminal device is displayed in the sharing window of the first terminal device, the second operation may be dragging the first floating icon to a corresponding location of the third APP in the sharing window.

Alternatively, when the third APP of the second terminal device is displayed in the sharing window of the terminal device, the second operation may be a tap operation performed on the first floating icon and a tap operation performed on the second APP, and a time interval between the two tap operations falls within a second time range. The first time range may be the same as or different from the second time range.

Certainly, the second operation may alternatively be an operation in another form. This is not limited in this embodiment of this application.

In the conventional technology, if the first file of the first terminal device needs to be shared with the third APP of the second terminal device, the first file first needs to be searched for, and then the first file is transmitted to the second terminal device through the network connection, so that the second terminal device shares the received first file with the third APP.

In this process, the first file first needs to be searched for. However, the existing file search solution is complex, and a process of searching for the first file consumes a large amount of time. Therefore, when the first file is shared to an APP of a third terminal device by using the conventional technology, a large amount of time needs to be consumed, and efficiency is low.

However, in the solutions provided in this embodiment of this application, the first floating icon of the first file is displayed on the first terminal device, and the first file may be transmitted to the second terminal device by performing a corresponding operation on the first floating icon, so that the second terminal device shares the received first file with the third APP. In this process, there is no need to search for the first file. Therefore, efficiency of sharing a file with an APP of another terminal device can be improved.

Further, in the solutions in this embodiment of this application, when transmitting the first file to the second terminal device, the first terminal device may encrypt the first file in an encryption manner negotiated with the second terminal device in advance, and then transmit an encrypted first file to the second terminal device. After receiving the encrypted first file, the second terminal device may decrypt the encrypted first file, and then share a decrypted first file with the third APP. This reduces a possibility of leakage of the first file, and improves security of the first file.

To clarify a manner of sharing the first file with the third APP of the second terminal device, this application discloses the following example.

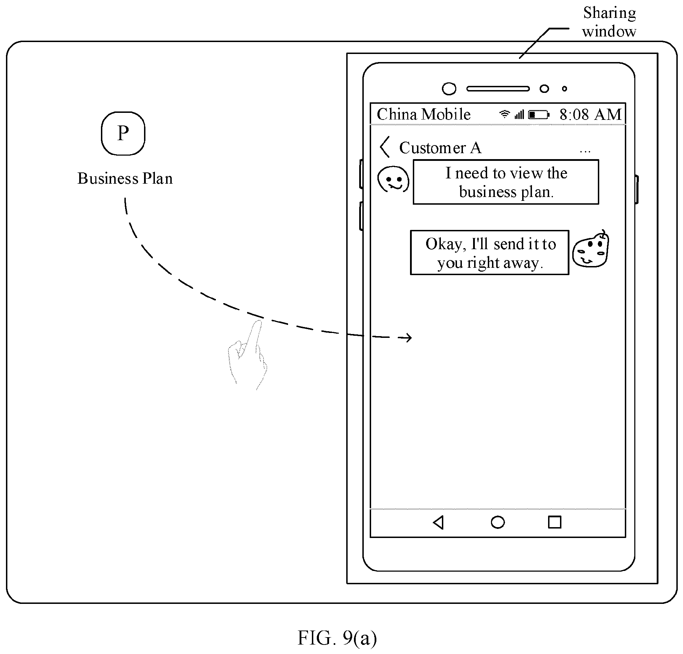

Refer to a schematic diagram shown in FIG. 9(a). In this example, the first terminal device is a computer, the second terminal device is a mobile phone, the display interface of the first terminal device includes a sharing window, the sharing window includes the third APP of the second terminal device, and the third APP is an APP used for instant messaging. The first file is a portable document format (portable document format, PDF) file, and a name of the file is "Business Plan". In addition to the sharing window, the first floating icon of the first file is further displayed on the display interface of the first terminal device, and the first floating icon includes the name of the text file.

In this example, the first file needs to be shared with a user "Customer A" of the third APP. In this case, the second terminal device may open the third APP, and enter a communication interface for communicating with the "Customer A". Correspondingly, the communication interface is displayed in the sharing window.

Alternatively, when an operation of opening the third APP in the sharing window of the first terminal device is received, the third APP may also be opened, so that the communication interface for communicating with the "Customer A" is displayed in the sharing window.

If the first file needs to be shared with the third APP, a second operation may be performed on the first floating icon. The second operation may be dragging the first floating icon to the communication interface included in the sharing window. In this case, after receiving the second operation, the first terminal device transmits the first file and the first instruction to the second terminal device through the network connection.

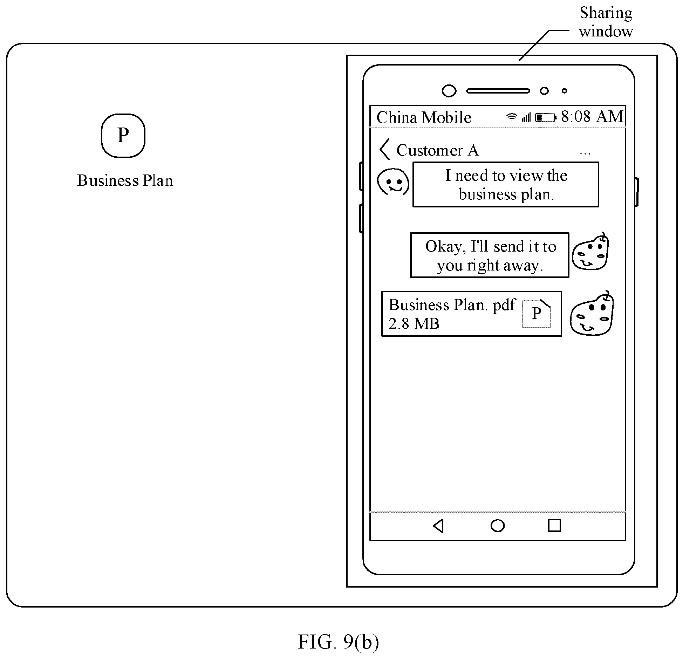

As shown in FIG. 9(b), after receiving the first file, the second terminal device shares the first file with the third APP according to an indication of the first instruction, so that the third APP obtains the first file and sends the first file to the "Customer A".

According to the examples in FIG. 9(a) and FIG. 9(b), the first terminal device can share the first file with the third APP of the second terminal device, so that the first terminal device and the second terminal device share the first file. In addition, in this process, there is no need to search for the first file, and only a corresponding operation needs to be performed on the first floating icon. This effectively improves efficiency of sharing the first file with an APP of another terminal device.

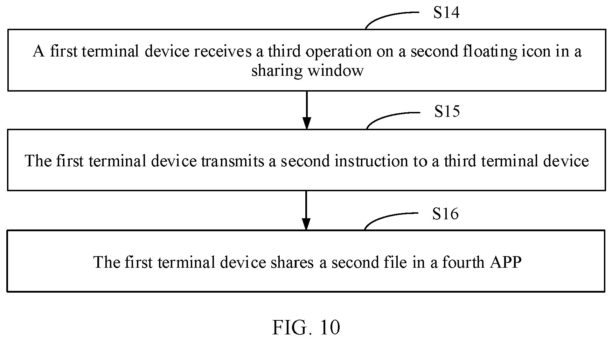

The first terminal device may further establish a network connection to the third terminal device. In this case, the first terminal device sometimes needs to obtain a file in the third terminal device. Refer to a schematic diagram of a working procedure shown in FIG. 10. To meet this requirement, the solutions provided in this embodiment of this application further include the following steps.

Step S14: The first terminal device receives a third operation on a second floating icon in the sharing window.

The second floating icon is an icon of a second file of a third terminal device, and the third operation is used to indicate to share the second file in a fourth APP of the first terminal device.

In this embodiment of this application, the third terminal device may receive an operation on the second file, and process the second file based on the operation. In addition, the second floating icon of the second file may be displayed on a display interface of the third terminal device. The display interface of the first terminal device may include the sharing window, and an interface of the third terminal device is displayed in the sharing window. Therefore, the second floating icon of the second file is displayed in the sharing window. In this case, if the second file needs to be shared in the fourth APP of the first terminal device, the third operation may be performed on the second floating icon in the sharing window.

The third operation may be in a plurality of forms. For example, when the second floating icon is displayed in the sharing window of the first terminal device, the third operation may be dragging the second floating icon to a corresponding location of the fourth APP on the display interface of the first terminal device.

Alternatively, the third operation may be a tap operation performed on the second floating icon in the sharing window and a tap operation performed on a corresponding location of the fourth APP on the display interface of the first terminal device, and a time interval between the two tap operations falls within a third time range. The third time range may be the same as the first time range or the second time range, or may be different from both the first time range and the second time range.

Certainly, the third operation may alternatively be an operation in another form. This is not limited in this embodiment of this application.

Step S15: The first terminal device transmits a second instruction to the third terminal device based on the third operation.

The second instruction is used to instruct to share the second file with the first terminal device, so that the third terminal device transmits the second file to the first terminal device after receiving the second instruction.

Step S16: After receiving the second file, the first terminal device shares the second file in the fourth APP.

After receiving the second instruction, the third terminal device transmits the second file to the first terminal device. After receiving the second file transmitted by the third terminal device, the first terminal device shares the second file in the fourth APP.

In the solutions disclosed in step S14 to step S16, if the fourth APP of the first terminal device needs to share the second file of the third terminal device, the first terminal device transmits the second instruction to the third terminal device after receiving the third operation on the second floating icon in the sharing window. The third terminal device transmits the second file to the first terminal device after obtaining the second instruction. After receiving the second file, the first terminal device shares the second file with the fourth APP, to share the second file of the third terminal device with the fourth APP of the first terminal device.

In the conventional technology, if the fourth APP of the first terminal device requires the second file of the third terminal device, the first terminal device usually needs to perform an operation on the interface of the third terminal device displayed in the sharing window. After receiving the operation on the sharing window, the first terminal device transmits a corresponding instruction to the third terminal device to search for the second file in the third terminal device. The third terminal device determines the second file based on the received instruction, and transmits the second file to the first terminal device through the network connection. Then, the first terminal device shares the received second file with the fourth APP.

For example, when the second file is searched for by using the conventional technology, if the second file is searched for by using the file manager, the first terminal device may receive a plurality of operations on the sharing window, where the plurality of operations are used to enable the third terminal device to open the file manager, open a file group displayed in the file manager, and determine that a file in the file group is the second file. Correspondingly, after receiving the foregoing operations, the first terminal device transmits a corresponding instruction to the third terminal device, so that the third terminal device performs an operation corresponding to the instruction, to find the second file.

In this process, the third terminal device needs to search for the second file. However, an existing file search solution is complex, and a process of searching for the second file consumes a large amount of time. Therefore, when the second file of the third terminal device is shared with the first terminal device by using the conventional technology, efficiency is low.

However, in the solutions provided in this embodiment of this application, the second floating icon of the second file is displayed in the sharing window of the first terminal device. By performing a corresponding operation on the second floating icon, the first terminal device can obtain and share the second file transmitted by the third terminal device, without searching for the second file. Therefore, efficiency of obtaining, by the first terminal device, a file shared by another terminal device can be improved in the solutions provided in this embodiment of this application.

To clarify a manner in which the first terminal device obtains a file shared by the third terminal device, this application discloses the following example.

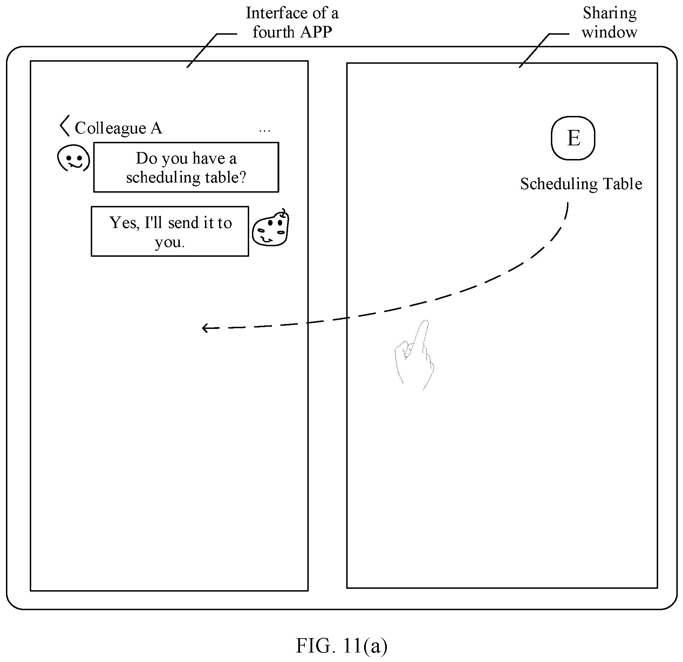

Refer to a schematic diagram shown in FIG. 11(a). In this example, the first terminal device is a computer, the third terminal device is a mobile phone, the display interface of the first terminal device includes a sharing window, and the sharing window includes the second floating icon of the second file. The second file is a file in the third terminal device, the second file is a table file, and a name of the file is "Scheduling Table".

In addition, the fourth APP is an APP used for instant messaging in the first terminal device. In this example, the second file needs to be shared with the fourth APP. Specifically, in this example, the second file needs to be shared with a "Colleague A" of the fourth APP. In this case, the first terminal device may open the fourth APP, and enter an interface for communicating with the "Colleague A".

If the second file needs to be shared with the fourth APP, a third operation may be performed on the second floating icon. Refer to a schematic diagram shown in FIG. 11(a). The third operation may be dragging the second floating icon from the sharing window to an interface of the fourth APP.

After receiving the third operation, the first terminal device transmits the second instruction to the third terminal device through the network connection.

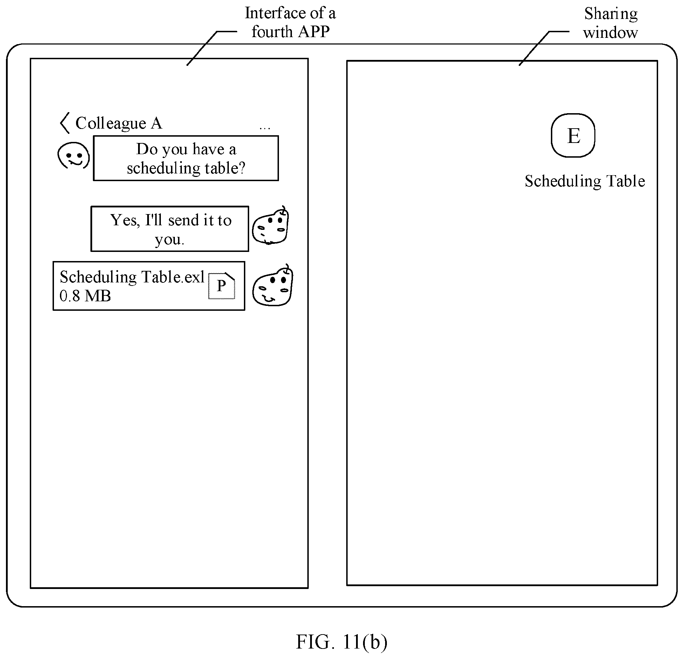

After receiving the second instruction, the third terminal device transmits the second file to the first terminal device. As shown in FIG. 11(b), after receiving the second file, the first terminal device shares the second file with the fourth APP, so that the fourth APP obtains the second file.

According to the examples in FIG. 11(a) and FIG. 11(b), the fourth APP of the first terminal device can obtain the second file of the third terminal device, so that the first terminal device and the third terminal device can share the second file. In addition, in this process, there is no need to search for the first APP, and only a corresponding operation needs to be performed on the second floating icon. This effectively improves efficiency of obtaining a file of another terminal device by the first terminal device.

In the foregoing embodiments, different operations on the first floating icon are separately provided, and the first terminal device uses different application solutions for the first file. The first floating icon is an icon of the first file, and the first terminal device displays the first floating icon after receiving the first operation on the first file.

In a feasible implementation, the first terminal device displays the first floating icon after receiving the first operation on the first file. Alternatively, in another feasible implementation, the first terminal device may perform corresponding processing on the first file after receiving the first operation, and display the first floating icon after completing processing. In this solution, the first terminal device monitors a processing status of the first file, to determine whether processing of the first file is completed.

In addition, in the solutions provided in this embodiment of this application, the first terminal device may display a floating icon of a file of each APP. Alternatively, the first terminal device may display only a floating icon of a target APP, where a file of the target APP includes an editable file.

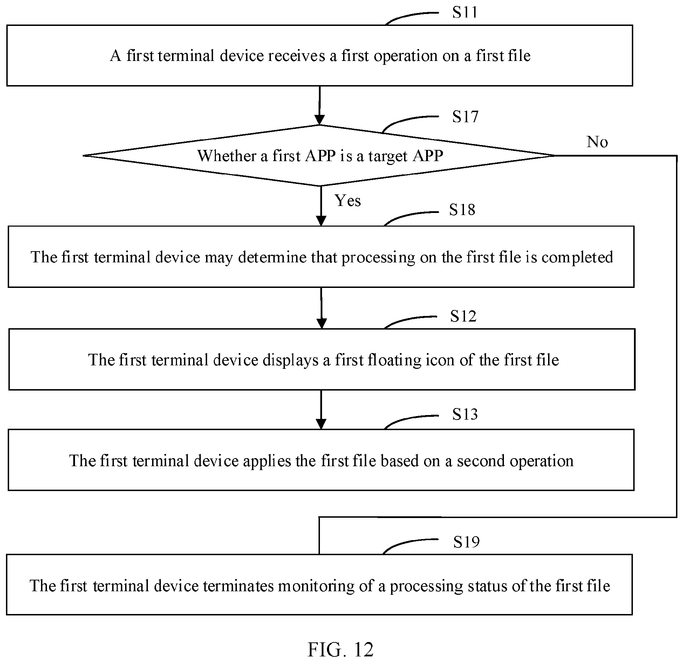

In this case, refer to a schematic diagram of a working procedure shown in FIG. 12. In the solutions provided in this embodiment of this application, before the first terminal device displays first floating icon of the first file, the method may further include the following steps.

Step S17: The first terminal device determines whether the first APP is a target APP. If the first APP is a target APP, an operation in step S18 is performed.

The first file is a file of the first APP, and the file of the target APP includes an editable file.

In this embodiment of this application, an APP usually includes a file generated by the APP and a file that can be received by the APP. For example, if an APP may generate a text file (for example, create a word text), the APP includes a text file generated by the APP. In another example, if an APP may download a file through a network connection, the APP includes a text file downloaded by the APP.

In addition, in the solutions provided in the examples of this application, if a file of an APP includes an editable file, the APP is a target APP. The editable file usually refers to a file that can be created, modified, or deleted and/or whose storage location can be moved.

Step S18: After determining that the first APP is a target APP, the first terminal device determines, by monitoring the processing status of the first file, that processing on the first file is completed.

In the solutions provided in this embodiment of this application, the first terminal device may listen to an event related to the first file, and determine, based on a listening result, whether processing on the first file is completed.

Usually, if the first terminal device listens to an event for the first file, for example, closing or saving as, the first terminal device may determine that processing on the first file is completed.

In a feasible example, if the software architecture of the first terminal device is shown in FIG. 4 or FIG. 5, the first terminal device may listen to the processing status of the first file by using the INotify module disposed at the kernel layer.

In this case, after determining that processing on the first file is completed, the first terminal device displays the first floating icon of the first file.

Further, in this embodiment of this application, if the first terminal device determines, by performing an operation in step S 17, that the first APP is not a target APP, the first terminal device may further perform an operation in step S19. In this case, this embodiment of this application further includes the following steps.

Step S19: The first terminal device terminates monitoring of the processing status of the first file.

In the solutions provided in this embodiment of this application, if the first terminal device receives the first operation on the first file of the first APP, and the first APP is a target APP, the first terminal device monitors the processing status of the first file, to determine whether processing on the first file is completed. In other words, by using the solutions in this embodiment, the first terminal device may monitor only a processing status of a file of the target APP, and generate only a floating icon of the file of the target APP.

A terminal device usually includes a plurality of APPs. The plurality of APPs may be classified into two types: a target APP and a non-target APP. A file of the target APP includes an editable file, and all of files of the non-target APP are not editable. In this case, the user usually can only view a file of the non-target APP, but cannot edit the file of the non-target APP. A file of the target APP may be edited in a plurality of forms, for example, modified or deleted. Compared with the file of the target APP, there are fewer opportunities to apply the file of the non-target APP.

Therefore, in the solutions provided in this embodiment of this application, after it is determined that the first APP is the target APP, the processing status of the first file of the first APP is monitored. If the APP to which the first file belongs is a non-target APP, the processing status of the first file is not monitored. Therefore, the first terminal device does not need to monitor files of all APPs. This effectively reduces running load of the first terminal device and improves running stability of the first terminal device.

In the foregoing embodiments, an operation of determining, by the first terminal device, whether the first APP is a target APP is provided. The operation may include the following steps.

The first terminal device determines information about the first APP based on an installation package of the first APP.

When the information about the first APP indicates that a file of the first APP includes an editable file, or when the information about the first APP indicates that the first APP is an APP included in a target application list, the first terminal device determines that the first APP is a target APP. The target application list includes at least one target APP.

In an installation process of the first APP, the first terminal device may obtain the installation package of the first APP. The information about the first APP may be determined by parsing the installation package of the first APP. The information about the first APP usually includes a name of the first APP and a component included in the first APP.

In the foregoing steps, two manners of determining whether the first APP is a target APP are provided. In a first manner, whether the first APP is a target APP is determined based on whether a file of the first APP includes an editable file. In this case, whether the file of the first APP includes an editable file may be determined by using the component included in the first APP.

One APP usually includes a plurality of components. For example, an APP of an Android system usually includes the following components: an activity (activity) component, a service (service) component, a content (content) component, an intent (intent) component, a broadcast receiver (broadcast receiver) component, and a notification (notification) component.

After a plurality of components of the first APP are obtained by analyzing the installation package of the first APP, whether the file of the first APP includes an editable file may be determined by using the components. If the first APP includes the editable file, it may be determined that the first APP is a target APP.

In another manner, the target application list may be set, and the target application list includes at least one target APP. In this case, the information about the first APP may be matched with the target application list. If the information about the first APP matches the target application list, it indicates that the first APP is a target APP.

For example, the target application list includes a name of each target APP. If it is determined, based on the installation package of the first APP, that the name of the first APP is in the target application list, it may be determined that the first APP is a target APP.

Certainly, whether the first APP is a target APP may be alternatively determined in another manner. This is not limited in this embodiment of this application.

Further, the solutions provided in this embodiment of this application further include the following step:
after processing on the first file is completed, storing a processed first file in a database.

In this embodiment of this application, the first terminal device is provided with the database of the first APP. In this case, after completing processing on the first file, the first terminal device may store the processed first file in the database, so that the first file in the database is the processed file. For example, if the software architecture of the first terminal device is shown in FIG. 5, the application framework layer of the first terminal device includes the database of the first APP.

Further, in this embodiment of this application, after processing on the first file is completed, whether the first file changes may be determined. If the first file changes, the processed first file is stored in the database, to update the database.

After it is determined that the first file changes, the database is updated based on a changed first file, so that it can be ensured that the file in the database is always an updated file while it is ensured that the first file is stored in the database.

In addition, in this embodiment of this application, whether the first file changes may be determined based on a type of the first operation. For example, if the first operation is modifying the first file, the first file changes. If the first operation is opening or moving a storage location of the first file, or the like, the first file usually does not change.

Certainly, whether the first file changes may be alternatively determined in another manner. This is not limited in this embodiment of this application.

In this case, in the solutions provided in this embodiment of this application, that the first terminal device applies the first file based on the second operation includes: The first terminal device applies the first file in the database.

For example, if the first device needs to share the first file with the second APP, the first terminal device extracts the first file from the database, and then shares the extracted first file with the second APP. If the first terminal device needs to transmit the first file to the second terminal device, the first terminal device extracts the first file from the database, and then transmits the extracted first file to the second terminal device.

According to this embodiment, it can be ensured that the first file applied by the first terminal device is the processed first file.

In addition, in the conventional technology, when the user needs to apply a file of the first APP, the user usually searches for the file in a manner of opening the file manager. However, the file manager usually includes only some files of the first APP. If the file manager does not include the file that is to be applied, the required file cannot be found, and further, the user cannot apply the file.

However, in the solutions provided in this embodiment of this application, each time after the first file is processed, a processed first file is stored in the database of the first APP. Therefore, the database includes each processed file. The database tends to include more abundant files than the file manager. Therefore, compared with the conventional technology, in the solutions provided in this embodiment of this application, a probability of finding a required file can be improved, and an application requirement of the file can be met.

Further, the solutions provided in this embodiment of this application may further include the following step:

After receiving a fourth operation on the first floating icon, and/or if no second operation on the first floating icon is received within a first time period, the first terminal device terminates display of the first floating icon.

The fourth operation is used to hide the first floating icon. If the user considers that the first file is not applied in long time, to keep the display interface of the first terminal device simple and elegant, the user may perform the fourth operation on the first terminal device. The first terminal device terminates display of the first floating icon after receiving the fourth operation.

In addition, a first time period may be set. If no second operation on the first floating icon is received within the first time period, there is a low probability that the first file is to be applied. In this case, the first terminal device may also terminate display of the first floating icon, to keep the display interface simple and elegant.

To clarify the file application method provided in this embodiment of this application, this application further provides an example. The example includes a terminal device A and a terminal device B that can perform the file application method provided in the foregoing embodiments. A network connection is established between the terminal device A and the terminal device B, and a display interface of the terminal device B may be displayed in a sharing window of the terminal device A.

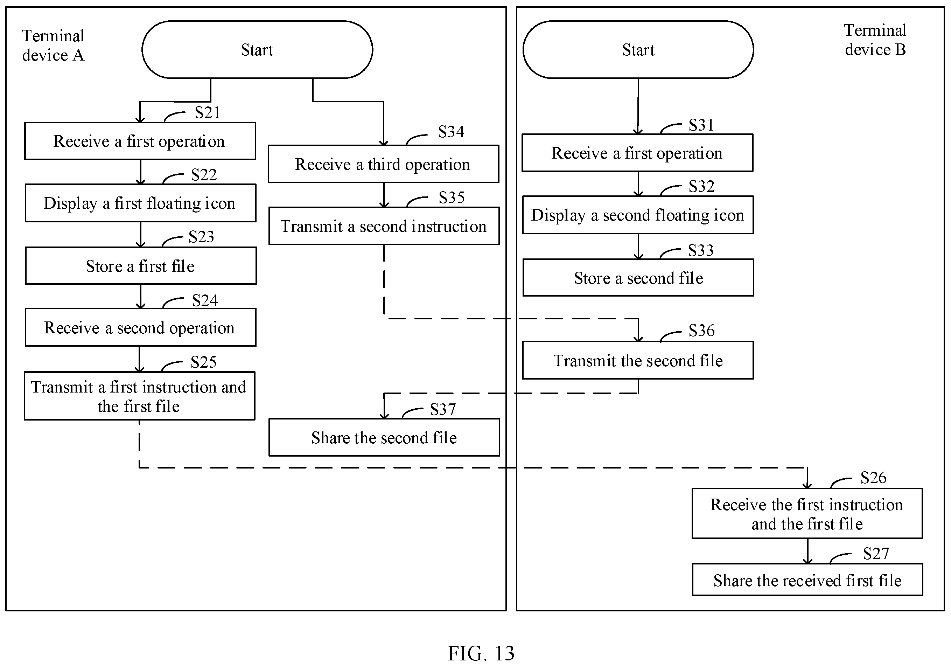

Refer to a schematic diagram of a working procedure shown in FIG. 13. The example includes the following steps.

Step S21: The terminal device A receives a first operation on a first file.

The first operation is used to process the first file, and the first file is a file of an APP in the terminal device A. In this case, the terminal device A processes the first file based on the first operation.

Step S22: The terminal device A displays a first floating icon of the first file.

In this example, the first file is set as a file of a first APP of the terminal device A. In this embodiment of this application, if the terminal device A displays the first floating icon after processing on the first file is completed, the terminal device A may listen to an event related to the first file, and display the first floating icon of the first file after determining, based on a listening result, that processing on the first file is completed.

Step S23: The terminal device A stores a processed first file in a database, so that the database stores the processed first file, to update the database.

In the solutions provided in this embodiment of this application, after completing processing on the first file, the terminal device A may store the processed first file in the database.

Alternatively, the terminal device A may store the processed first file in the database after determining that the first file is changed after current processing. In this case, after processing on the first file is completed, whether the first file changes may be determined based on a type of processing performed on the first file, and after it is determined that the first file changes, the processed first file is stored in the database, to update the database.

For example, if processing performed on the first file includes only opening the first file, it may be determined that the first file does not change. If processing performed on the first file includes modifying content of the first file, it may be determined that the first file changes.

In the foregoing steps and descriptions of FIG. 13, after the first floating icon is displayed, the processed first file is stored in the database. In actual application, the two steps are not performed in a strict sequence. For example, the first floating icon may be displayed after the processed first file is stored in the database, or the first file is stored and the first floating icon is displayed at the same time. This is not limited in this embodiment of this application.

Step S24: The terminal device A receives a second operation on the first floating icon.

In this example, the network connection is established between the terminal device A and the terminal device B, the display interface of the terminal device B is displayed in the sharing window of the terminal device A, and a third APP of the terminal device B is displayed on the display interface. In addition, the second operation is used to indicate to share the first file with the third APP.

Step S25: The terminal device A transmits a first instruction and the first file to the terminal device B based on the second operation.

The first instruction is used to instruct to share the first file with the third APP.

In addition, in this step, the first file transmitted by the terminal device A may be a first file extracted from the database. That is, after receiving the second operation, the terminal device A extracts the first file from the database, and then transmits the extracted first file to the terminal device B.

Step S26: The terminal device B receives the first instruction and the first file.

In this example, the network connection is established between the terminal device A and the terminal device B, and the terminal device B may obtain the first instruction and the first file through the network connection.

Step S27: The terminal device B shares the received first file with the third APP according to an indication of the first instruction, so that the third APP obtains the first file.

By performing the operations in step S21 to step S27, the terminal device A may share the first file with the third APP of the terminal device B by performing the second operation on the first floating icon of the first file. In addition, in this process, the terminal device A does not need to search for the first file. This effectively improves efficiency of sharing the first file with the terminal device B.

In addition, after the terminal device A establishes the network connection to the terminal device B, the terminal device A sometimes needs to apply a second file in the terminal device B. To meet this requirement, the example further includes the following steps.

Step S31: The terminal device B receives a first operation on the second file.

The first operation on the second file is used to process the second file, and the second file is a file of an APP in the terminal device B.

Step S32: The terminal device B displays a second floating icon of the second file.

That is, the terminal device B may also display the second floating icon of the second file included in the terminal device B. For a display manner of the second floating icon, refer to the foregoing embodiment. Details are not described herein again.

In addition, the terminal device B may display the second floating icon after receiving the first operation on the second file. Alternatively, the terminal device B may display the second floating icon after completing processing on the second file. In this case, the terminal device B may listen to an event related to the second file, and determine, based on a listening result, whether processing on the second file is completed.

Step S33: The terminal device B stores a processed second file in a database, so that the database stores the processed second file, to update the database.

In the solutions provided in this embodiment of this application, after completing processing on the second file, the terminal device B may store the processed second file in the database.

Alternatively, the terminal device B may store the processed second file in the database after determining that the second file changes after current processing.

In the foregoing steps and descriptions in FIG. 13, after the second floating icon is displayed, the processed second file is stored in the database. In an actual process, the two steps are not performed in a strict sequence. For example, the second floating icon may be displayed after the processed second file is stored in the database, or the second file may be stored and the second floating icon may be displayed at the same time. This is not limited in this embodiment of this application.

With the foregoing operations, the second floating icon of the second file can be displayed on the display interface of the terminal device B.

Step S34: The terminal device A receives a third operation on the second floating icon in the sharing window.

In this example, a display interface of the terminal device A includes the sharing window, and the sharing window includes the display interface of the terminal device B. Because the display interface of the terminal device B includes the second floating icon, the second floating icon is displayed in the sharing window, and the terminal device A may receive the third operation on the second floating icon.

The third operation is used to indicate to share the second file in a fourth APP of the terminal device A.

Step S35: After receiving the third operation, the terminal device A transmits a second instruction to the terminal device B.

The second instruction is used to instruct to share the second file with the terminal device A.

Step S36: The terminal device B receives the second instruction, and transmits the second file to the terminal device A according to an indication of the second instruction.

Step S37: The terminal device A receives the second file, and shares the second file in the fourth APP.

With the operations in step S31 to step S37, the terminal device A may share the second file in the terminal device B in the fourth APP of the terminal device A by performing the third operation on the second floating icon in the sharing window, to meet a requirement of the terminal device A for obtaining the second file of the terminal device B. In addition, in this process, the terminal device B does not need to search for the second file. This effectively improves efficiency of obtaining the second file by the terminal device A.

Corresponding to the methods provided in the foregoing embodiments, an embodiment of this application further provides a file application method, and the method is applied to a second terminal device. A network connection is established between the second terminal device and a first terminal device, the first terminal device displays a sharing window, and an interface of the second terminal device is displayed in the sharing window.

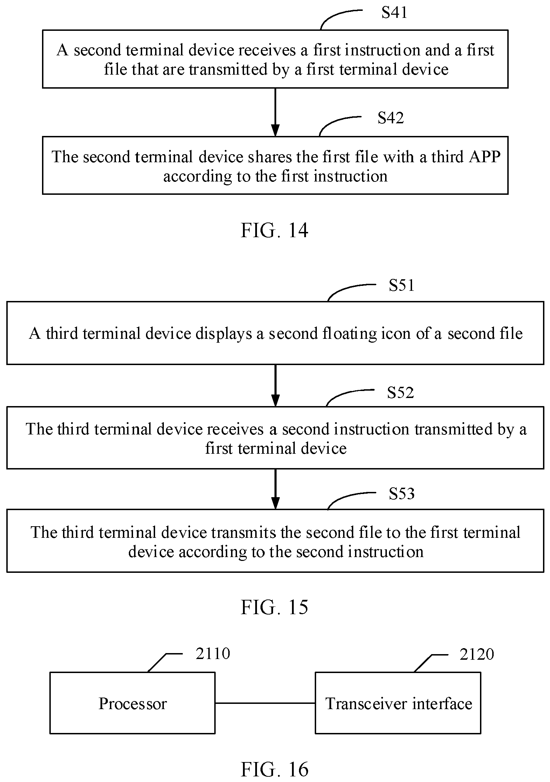

Refer to a schematic diagram of a working procedure shown in FIG. 14. The method includes the following steps.

Step S41: The second terminal device receives a first instruction and a first file that are transmitted by the first terminal device, where a third APP of the second terminal device is displayed in the sharing window of the first terminal device, and the first instruction is used to instruct to share the first file with the third APP.

The first terminal device includes the first file, and a first floating icon of the first file is displayed on the first terminal device. If the first terminal device needs to share the first file with the third APP of the second terminal device, the first terminal device may receive a second operation on the first floating icon, where the second operation is used to indicate to share the first file with the third APP.

After receiving the second operation, the first terminal device generates the corresponding first instruction based on the second operation, and transmits the first instruction and the first file to the second terminal device.

Step S42: The second terminal device shares the first file with the third APP according to the first instruction.

After receiving the first instruction and the first file, the second terminal device shares the first file according to an indication of the first instruction.

In addition, if the first terminal device encrypts the first file in an encryption manner negotiated with the second terminal device, and transmits an encrypted first file to the second terminal device, before sharing the first file, the second terminal device may decrypt the received first file based on the negotiated encryption manner, and then share a decrypted first file with the third APP, so that the third APP obtains the first file. This can further reduce a possibility of leakage of the first file, and improve security of the first file.

By performing operations in step S41 to step S42, the second terminal device may obtain the first file shared by the first terminal device. In addition, in this process, the first terminal device may transmit the first file to the second terminal device by performing a corresponding operation on the first floating icon of the first file, without searching for the first file. Therefore, efficiency of obtaining the first file by the second terminal device can be improved.

Corresponding to the methods provided in the foregoing embodiments, an embodiment of this application further provides a file application method, and the method is applied to a third terminal device. A network connection is established between the third terminal device and a first terminal device, the first terminal device displays a sharing window, and an interface of the third terminal device is displayed in the sharing window.

Refer to a schematic diagram of a working procedure shown in FIG. 15. The method includes the following steps.

Step S51: The third terminal device displays a second floating icon of a second file.

The second file is a file in the third terminal device, and the third terminal device may receive a first operation on the second file, and display the second floating icon of the second file through the display interface of the third terminal device.

A manner of displaying the second floating icon by the third terminal device may be the same as a manner of displaying the first floating icon by the first terminal device. Details are not described herein again.

Step S52: The third terminal device receives a second instruction transmitted by the first terminal device.

The second floating icon is displayed in the sharing window of the first terminal device, and the second instruction is used to instruct to share the second file with the first terminal device.

If a fourth APP of the first terminal device needs to obtain the second file of the third terminal device, the first terminal device may receive a third operation on the second floating icon in the sharing window, generate the second instruction based on the third operation, and transmit the second instruction to the third terminal device.

Step S53: The third terminal device transmits the second file to the first terminal device according to the second instruction.

After receiving the second instruction, the third terminal device transmits the first file to the first terminal device according to an indication of the second instruction. After receiving the second file transmitted by the third terminal device, the first terminal device may apply the second file.

According to the solutions provided in step S51 to step S53, the second file of the third terminal device can be shared with the first terminal device. In addition, in this process, the first terminal device may transmit a corresponding second instruction by performing a corresponding operation on the second floating icon of the second file in the sharing window, so that the third terminal device that receives the second instruction transmits the second file to the first terminal device, without searching for the second file. Therefore, efficiency of obtaining the second file by the first terminal device can be improved.

The following provides apparatus embodiments of this application that may be used to execute the method embodiments of this application. For details not disclosed in apparatus embodiments of this application, refer to the method embodiments of this application.

As an implementation of the foregoing embodiments, an embodiment of this application discloses a file application apparatus. Refer to a schematic diagram of a structure shown in FIG. 16. The file application apparatus disclosed in this embodiment of this application includes a processor 2110 and a transceiver interface 2120.

The transceiver interface 2120 is configured to receive a first operation on a first file, where the first operation is used to process the first file.

The processor 2110 is configured to: display a first floating icon of the first file, and after a second operation on the first floating icon is received, apply the first file based on the second operation.

According to the solutions provided in this embodiment of this application, the first floating icon of the first file can be displayed on a display interface of a first terminal device after the first operation on the first file is received. In addition, after receiving the second operation on the first floating icon, the first terminal device applies the first file based on the second operation.

In this case, if the first file is to be applied, an operation is directly performed on the first floating icon of the first file, and a user does not need to search for the first file. Therefore, applying a file by using the solutions provided in this embodiment of this application can avoid impact of low file search efficiency in the conventional technology, to improve file application efficiency.

In the solutions provided in this embodiment of this application, to meet diversified application requirements, a plurality of types of application may alternatively be performed on the first file based on different second operations.

In a feasible implementation, the second operation is used to indicate to display the first file. In this case, the processor is specifically configured to open and display the first file.

In the solutions provided in this embodiment of this application, if the user wants to view the first file, the user only needs to perform a corresponding operation on the first floating icon, and the first terminal device may open and display the first file based on the operation performed on the first floating icon, to implement quick display of the first file.

In another feasible implementation, the second operation is used to indicate to share the first file with a second application APP, the first file is a file of a first APP, and the first APP and the second APP are APPs installed in the first terminal device.

In this case, the processor is specifically configured to share the first file with the second APP.

According to the solutions provided in this embodiment of this application, the first floating icon of the first file is displayed on the first terminal device, and only a corresponding second operation needs to be performed on the first floating icon. For example, the first floating icon is dragged to a location of an icon of the second APP, so that the first file can be shared with the second APP of the terminal device, and there is no need to search for the first file. Therefore, efficiency of sharing a file to different APPs in a same terminal device can be improved.

In another feasible implementation, a third APP of a second terminal device is displayed in the sharing window of the first terminal device, and the second operation is used to indicate to share the first file with the third APP.

In this case, the processor is specifically configured to transmit a first instruction and the first file to the second terminal device, where the first instruction is used to instruct to share the first file with the third APP.

However, in the solutions provided in this embodiment of this application, the first floating icon of the first file is displayed on the first terminal device, and the first file may be transmitted to the second terminal device by performing a corresponding operation on the first floating icon, so that the second terminal device shares the received first file with the third APP. In this process, there is no need to search for the first file. Therefore, efficiency of sharing a file with an APP of another terminal device can be improved.

Further, in the solutions provided in this embodiment of this application, the transceiver interface is further configured to receive a third operation on a second floating icon in the sharing window, where the second floating icon is an icon of a second file of a third terminal device, and the third operation is used to indicate to share the second file in a fourth APP of the first terminal device.

The transceiver interface is further configured to transmit a second instruction to the third terminal device based on the third operation, where the second instruction is used to instruct to share the second file with the first terminal device.

The processor is further configured to share the second file in the fourth APP after the second file is received.

In the solutions provided in this embodiment of this application, the second floating icon of the second file is displayed in the sharing window of the first terminal device. By performing a corresponding operation on the second floating icon, the first terminal device can obtain and share the second file transmitted by the third terminal device, without searching for the second file. Therefore, efficiency of obtaining, by the first terminal device, a file shared by another terminal device can be improved in the solutions provided in this embodiment of this application.

Further, in the solutions provided in this embodiment of this application, the processor is further configured to: before the first terminal device displays the first floating icon of the first file, determine that the first APP is a target APP, where the first file is a file of the first APP, and a file of the target APP includes an editable file.

The processor is further configured to: after it is determined that the first APP is a target APP, determine, by monitoring a processing status of the first file, that processing on the first file is completed.

In the solutions provided in this embodiment of this application, after it is determined that the first APP is a target APP, the processing status of the first file of the first APP is monitored. If the APP to which the first file belongs is a non-target APP, the processing status of the first file is not monitored. Therefore, the first terminal device does not need to monitor files of all APPs. This effectively reduces running load of the first terminal device and improves running stability of the first terminal device.

In the solutions provided in this embodiment of this application, the processor is specifically configured to: determine information about the first APP based on an installation package of the first APP, and when the information about the first APP indicates that a file of the first APP includes an editable file, or when the information about the first APP indicates that the first APP is an APP included in a target application list, determine that the first APP is a target APP, where the target application list includes at least one target APP.

Further, the processor is further configured to: after processing on the first file is completed, store a processed first file in a database.

The processor is specifically configured to apply the first file in the database.

Further, the processor is further configured to: after a fourth operation on the first floating icon is received, and/or if no second operation on the first floating icon is received within a first time period, terminate display of the first floating icon.

Another embodiment of this application provides a file application apparatus. The file application apparatus is usually applied to a second terminal device. A network connection is established between the second terminal device and a first terminal device, the first terminal device displays a sharing window, and an interface of the second terminal device is displayed in the sharing window.

In the solutions provided in this embodiment of this application, the file application apparatus includes a processor and a transceiver interface.

The transceiver interface is configured to receive a first instruction and a first file that are transmitted by the first terminal device. A third APP of the second terminal device is displayed in the sharing window of the first terminal device, and the first instruction is used to instruct to share the first file with the third APP.

The processor is configured to share, by the device, the first file with the third APP according to the first instruction.

According to the solutions provided in this embodiment of this application, the second terminal device may obtain the first file shared by the first terminal device. In addition, in this process, the first terminal device may transmit the first file to the second terminal device by performing a corresponding operation on a first floating icon of the first file, without searching for the first file. Therefore, efficiency of obtaining the first file by the second terminal device can be improved.

Corresponding to the methods provided in the foregoing embodiments, an embodiment of this application further provides a file application apparatus. The apparatus is usually applied to a third terminal device. A network connection is established between the third terminal device and a first terminal device, the first terminal device displays a sharing window, and an interface of the third terminal device is displayed in the sharing window.

In the solutions provided in this embodiment of this application, the file application apparatus includes a processor and a transceiver interface.

The processor is configured to display a second floating icon of a second file.

The transceiver interface is configured to receive a second instruction transmitted by the first terminal device. The second floating icon is displayed in the sharing window of the first terminal device, and the second instruction is used to instruct to share the second file with the first terminal device.

The transceiver interface is further configured to transmit the second file to the first terminal device according to the second instruction.

In the solutions provided in this embodiment of this application, the second floating icon of the second file is displayed in the sharing window of the first terminal device. By performing a corresponding operation on the second floating icon, the first terminal device can obtain and share the second file transmitted by the third terminal device, without searching for the second file. Therefore, efficiency of obtaining, by the first terminal device, a file shared by another terminal device can be improved in the solutions provided in this embodiment of this application.

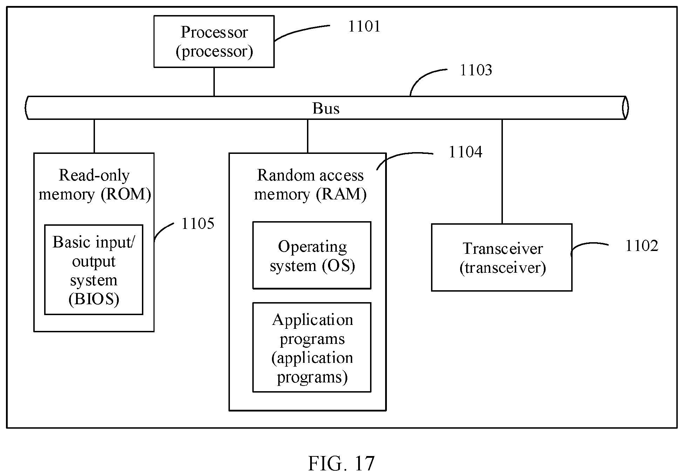

Correspondingly, corresponding to the foregoing methods, an embodiment of this application further discloses a terminal apparatus. Refer to a schematic diagram of a structure shown in FIG. 17, the terminal apparatus includes:
at least one processor 1101 and a memory.

The memory is configured to store program instructions.

The processor is configured to invoke and execute the program instructions stored in the memory, so that the terminal apparatus performs all or some of the steps in the embodiments corresponding to FIG. 6, FIG. 10, and FIG. 12.

The terminal apparatus may further include a transceiver 1102 and a bus 1103, and the memory includes a random access memory 1104 and a read-only memory 1105.

The processor is separately coupled to the transceiver, the random access memory, and the read-only memory by using the bus. When the terminal apparatus needs to run, starting is performed by using a basic input/output system built in the read-only memory or by using a bootloader system in an embedded system, to boot the terminal apparatus to enter a normal running state. After entering the normal running state, the terminal apparatus runs an application and an operating system in the random access memory, so that the terminal apparatus performs all or some of the steps in embodiments corresponding to FIG. 6, FIG. 10, and FIG. 12.

The apparatus in this embodiment of the present invention may correspond to the file application apparatus in the embodiments corresponding to FIG. 6, FIG. 10, and FIG. 12. In addition, the processor in the apparatus may implement functions of the file application apparatus in the embodiments corresponding to FIG. 6, FIG. 10, and FIG. 12 or various steps and methods implemented by the file application apparatus in the embodiments corresponding to FIG. 6, FIG. 10, and FIG. 12. For brevity, details are not described herein again.

Correspondingly, corresponding to the foregoing methods, an embodiment of this application further discloses a terminal apparatus. The terminal apparatus includes:
at least one processor and a memory.

The memory is configured to store program instructions.

The processor is configured to invoke and execute the program instructions stored in the memory, so that the terminal apparatus performs all or some of the steps in the embodiment corresponding to FIG. 14.

Further, the terminal apparatus may further include a transceiver and a bus. The memory includes a random access memory and a read-only memory.

The processor is separately coupled to the transceiver, the random access memory, and the read-only memory by using the bus. When the terminal apparatus needs to run, starting is performed by using a basic input/output system built in the read-only memory or by using a bootloader system in an embedded system, to boot the terminal apparatus to enter a normal running state. After entering the normal running state, the terminal apparatus runs an application and an operating system in the random access memory, so that the terminal apparatus performs all or some of the steps in the embodiment corresponding to FIG. 14.

The apparatus in this embodiment of the present invention may correspond to the file application apparatus in the embodiment corresponding to FIG. 14. In addition, the processor in the apparatus may implement functions of the file application apparatus or various steps and methods implemented by the file application apparatus in the embodiment corresponding to FIG. 14. For brevity, details are not described herein again.

Correspondingly, corresponding to the foregoing methods, an embodiment of this application further discloses a terminal apparatus. The terminal apparatus includes:
at least one processor and a memory.

The memory is configured to store program instructions.

The processor is configured to invoke and execute the program instructions stored in the memory, so that the terminal apparatus performs all or some of the steps in the embodiment corresponding to FIG. 15.

Further, the terminal apparatus may further include a transceiver and a bus. The memory includes a random access memory and a read-only memory.

The processor is separately coupled to the transceiver, the random access memory, and the read-only memory by using the bus. When the terminal apparatus needs to run, starting is performed by using a basic input/output system built in the read-only memory or by using a bootloader system in an embedded system, to boot the terminal apparatus to enter a normal running state. After entering the normal running state, the terminal apparatus runs an application and an operating system in the random access memory, so that the terminal apparatus performs all or some of the steps in the embodiment corresponding to FIG. 15.

The apparatus in this embodiment of the present invention may correspond to the file application apparatus in the embodiment corresponding to FIG. 15. In addition, the processor in the apparatus may implement functions of the file application apparatus in the embodiment corresponding to FIG. 15 or various steps and methods implemented by the file application apparatus in the embodiment corresponding to FIG. 15. For brevity, details are not described herein again.

Correspondingly, an embodiment of this application provides a file application system. The system includes a first terminal device and a second terminal device. A network connection is established between the second terminal device and the first terminal device, the first terminal device displays a sharing window, and an interface of the second terminal device is displayed in the sharing window.

The first terminal device in the file application system may correspond to the file application apparatus in the embodiments corresponding to FIG. 6, FIG. 10, and FIG. 12. In addition, a processor or the like in the first terminal device may implement functions of the file application apparatus in the embodiments corresponding to FIG. 6, FIG. 10, and FIG. 12 or various steps and methods implemented by the file application apparatus in the embodiments corresponding to FIG. 6, FIG. 10, and FIG. 12. For brevity, details are not described herein again.

In addition, the second terminal device in the file application system may correspond to the file application apparatus in the embodiment corresponding to FIG. 14, and a processor or the like in the second terminal device may implement functions of the file application apparatus in the embodiment corresponding to FIG. 14 or various steps and methods implemented by the file application apparatus in the embodiment corresponding to FIG. 14. For brevity, details are not described herein again.

In the system provided in this embodiment of this application, a third APP of the second terminal device may be displayed in the sharing window of the first terminal device, and after displaying a first floating icon of a first file, the first terminal device may receive a second operation on the first floating icon. If the second operation is used to indicate to share the first file with the third APP, the first terminal device may transmit a first instruction and the first file to the second terminal device. The first instruction is used to instruct to share the first file with the third APP. After receiving the instruction and the first file, the second terminal device shares the first file with the third APP of the second terminal device according to an indication of the first instruction.

According to the system provided in this embodiment of this application, the second terminal device may obtain the first file shared by the first terminal device. In addition, in this process, the first terminal device may transmit the first file to the second terminal device by performing a corresponding operation on the first floating icon of the first file, without searching for the first file. Therefore, efficiency of obtaining the first file by the second terminal device can be improved.

Further, the system provided in this embodiment of this application further includes a third terminal device. A network connection is established between the third terminal device and the first terminal device, the first terminal device displays the sharing window, and an interface of the third terminal device is displayed in the sharing window.

In addition, the second terminal device in the file application system may correspond to the file application apparatus in the embodiment corresponding to FIG. 15, and a processor or the like in the third terminal device may implement functions of the file application apparatus in the embodiment corresponding to FIG. 15 or various steps and methods implemented by the file application apparatus in the embodiment corresponding to FIG. 15. For brevity, details are not described herein again.

In this case, in the system provided in this embodiment of this application, the second floating icon of the second file is displayed in the sharing window of the first terminal device. By performing a corresponding operation on a second floating icon, the first terminal device can obtain and share a second file transmitted by the third terminal device, without searching for the second file. Therefore, efficiency of obtaining, by the first terminal device, a file shared by another terminal device can be improved in the solutions provided in this embodiment of this application.

During specific implementation, an embodiment of this application further provides a computer-readable storage medium. The computer-readable storage medium includes instructions. When a computer-readable medium disposed in any device runs on a computer, all or some of the steps in the embodiments corresponding to FIG. 6, FIG. 10, and FIG. 12 may be implemented. A storage medium of the computer-readable medium may include a magnetic disk, an optical disc, a read-only memory (English: read-only memory, ROM for short), a random access memory (English: random access memory, RAM for short), or the like.

During specific implementation, an embodiment of this application further provides a computer-readable storage medium. The computer-readable storage medium includes instructions. When a computer-readable medium disposed in any device runs on a computer, all or some of the steps in the embodiment corresponding to FIG. 14 may be implemented. A storage medium of the computer-readable medium may include a magnetic disk, an optical disc, a read-only memory (English: read-only memory, ROM for short), a random access memory (English: random access memory, RAM for short), or the like.

During specific implementation, an embodiment of this application further provides a computer-readable storage medium. The computer-readable storage medium includes instructions. When a computer-readable medium disposed in any device runs on a computer, all or some of the steps in the embodiment corresponding to FIG. 15 may be implemented. A storage medium of the computer-readable medium may include a magnetic disk, an optical disc, a read-only memory (English: read-only memory, ROM for short), a random access memory (English: random access memory, RAM for short), or the like.

In addition, another embodiment of this application further discloses a computer program product including instructions. When the computer program product runs on an electronic device, the electronic device is enabled to perform all or some of the steps in the embodiments corresponding to FIG. 6, FIG. 10, and FIG. 12.

In addition, another embodiment of this application further discloses a computer program product including instructions. When the computer program product runs on an electronic device, the electronic device is enabled to perform all or some of the steps in the embodiment corresponding to FIG. 14.

In addition, another embodiment of this application further discloses a computer program product including instructions. When the computer program product runs on an electronic device, the electronic device is enabled to perform all or some of the steps in the embodiment corresponding to FIG. 15.

The various illustrative logical units and circuits described in embodiments of this application may implement or operate the described functions by using a general-purpose processor, a digital information processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital information processor and a microprocessor, a plurality of microprocessors, one or more microprocessors with a digital information processor core, or any other similar configuration.

Steps of the methods or algorithms described in embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may connect to a processor so that the processor may read information from the storage medium and write information to the storage medium. Alternatively, the storage medium may be integrated into a processor. The processor and the storage medium may be disposed in an ASIC, and the ASIC may be disposed in UE. Optionally, the processor and the storage medium may be arranged in different components of the UE.

It should be understood that sequence numbers of the processes do not mean an execution sequence in various embodiments of this application. The execution sequence of the processes should be determined based on functions and internal logic of the processes, and should not be construed as any limitation on implementation processes of embodiments of this application.

All or some of the foregoing embodiments may be implemented by using software, hardware, firmware, or any combination thereof. When software is used to implement the embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

For same or similar parts in embodiments in this specification, refer to these embodiments. Each embodiment focuses on a difference from other embodiments. Especially, apparatus and system embodiments are basically similar to a method embodiment, and therefore are described briefly; for related parts, refer to partial descriptions in the method embodiment.

A person skilled in the art may clearly understand that, the technologies in embodiments of the present invention may be implemented by software in addition to a necessary general hardware platform. Based on such an understanding, the technical solutions of embodiments of the present invention essentially or the part contributing to the conventional technology may be implemented in a form of a software product. The computer software product is stored in a storage medium, for example, a ROM/RAM, a hard disk, or an optical disc, and includes several instructions for instructing a computer device (which may be a personal computer, a server, or a network device) to perform the methods described in embodiments or some parts of embodiments of the present invention.

For same or similar parts in embodiments of this specification, refer to these embodiments. Especially, the file application apparatus embodiments disclosed in this application are basically similar to the method embodiments, and therefore are described briefly. For related parts, refer to descriptions in the method embodiments.

The foregoing descriptions are implementations of the present invention, but are not intended to limit the protection scope of the present invention.

## Claims

1. A file application method, comprising:
receiving (S11), by a first terminal device, a first operation on a first file, wherein the first operation is an operation that changes the first file, and the first file is a file of a first application, APP;
displaying (S12), by the first terminal device, a first floating icon of the first file in response to the first operation; and
after receiving a second operation on the first floating icon, sharing (S13), by the first terminal device, the first file with a second APP; wherein the second operation is used to indicate to share the first file with the second APP, and the first APP and the second APP are APPs installed in the first terminal device; and wherein
the method further comprises:
after receiving a fourth operation on the first floating icon, and/or if no second operation on the first floating icon is received within a first time period, terminating (S19), by the first terminal device, display of the first floating icon.

2. The method according to claim 1, wherein before the displaying, by the first terminal device, a first floating icon of the first file, the method further comprises:
determining (S17), by the first terminal device, that the first APP is a target APP, wherein a file of the target APP comprises an editable file; and
after determining that the first APP is a target APP, determining, by the first terminal device by monitoring a processing status of the first file, that processing on the first file is completed.

3. The method according to claim 2, wherein the determining, by the first terminal device, that the first APP is a target APP comprises:
determining, by the first terminal device, information about the first APP based on an installation package of the first APP; and
when the information about the first APP indicates that a file of the first APP comprises an editable file, or when the information about the first APP indicates that the first APP is an APP comprised in a target application list, determining, by the first terminal device, that the first APP is a target APP, wherein the target application list comprises at least one target APP.

4. The method according to claim 1, further comprising:
after changing on the first file is completed, storing a changed first file in a database; and
the sharing, by the first terminal device, the first file with the second APP comprises:
sharing, by the first terminal device, the changed first file in the database with the second APP.

5. A terminal apparatus, comprising:
at least one processor and a memory, wherein
the memory is configured to store program instructions; and
the processor is configured to invoke and execute the program instructions stored in the memory, so that the terminal apparatus performs the file application method according to any one of claims 1 to 4.

6. A computer-readable storage medium, wherein
the computer-readable storage medium stores instructions, and when the instructions are run on a computer, the computer is enabled to perform the file application method according to any one of claims 1 to 4.

## Patentansprüche

1. Dateianwendungsverfahren, umfassend:
Empfangen (S11) einer ersten Operation an einer ersten Datei durch ein erstes Endgerät, wobei die erste Operation eine Operation ist, die die erste Datei ändert, und die erste Datei eine Datei einer ersten Anwendung, APP, ist;
Anzeigen (S12), durch das erste Endgerät, eines ersten schwebenden Symbols der ersten Datei als Reaktion auf die erste Operation; und
nach Empfangen einer zweiten Operation auf dem ersten schwebenden Symbol, Teilen (S13) der ersten Datei mit einer zweiten APP durch das erste Endgerät; wobei die zweite Operation verwendet wird, um anzugeben, die erste Datei mit der zweiten APP zu teilen, und die erste APP und die zweite APP APPs sind,
die auf dem ersten Endgerät installiert sind; und wobei das Verfahren ferner Folgendes umfasst:
nach Empfangen einer vierten Operation auf dem ersten schwebenden Symbol und/oder falls innerhalb einer ersten Zeitspanne keine zweite Operation auf dem ersten schwebenden Symbol empfangen wird, Beenden (S19) der Anzeige des ersten schwebenden Symbols durch das erste Endgerät.

2. Verfahren nach Anspruch 1, wobei das Verfahren vor dem Anzeigen eines ersten schwebenden Symbols der ersten Datei durch das erste Endgerät Folgendes umfasst:
Bestimmen (S17) durch das erste Endgerät, dass die erste APP eine Ziel-APP ist, wobei eine Datei der Ziel-APP eine bearbeitbare Datei umfasst; und
nach dem Bestimmen, dass die erste APP eine Ziel-APP ist, Bestimmen, durch das erste Endgerät durch Überwachen eines Verarbeitungsstatus der ersten Datei, dass ein Verarbeiten an der ersten Datei abgeschlossen ist.

3. Verfahren nach Anspruch 2, wobei das Bestimmen durch das erste Endgerät, dass die erste APP eine Ziel-APP ist, Folgendes umfasst:
Bestimmen von Informationen über die erste APP durch das erste Endgerät basierend auf einem Installationspaket der ersten APP; und
wenn die Informationen über die erste APP angeben, dass eine Datei der ersten APP eine bearbeitbare Datei umfasst, oder wenn die Informationen über die erste APP angeben, dass die erste APP eine in einer Zielanwendungsliste umfasste APP ist, Bestimmen durch das erste Endgerät, dass die erste APP eine Ziel-APP ist, wobei die Zielanwendungsliste mindestens eine Ziel-APP umfasst.

4. Verfahren nach Anspruch 1, ferner umfassend:
Speichern einer geänderten ersten Datei in einer Datenbank, nachdem das Ändern der ersten Datei abgeschlossen ist; und
wobei das Teilen der ersten Datei mit der zweiten APP durch das erste Endgerät Folgendes umfasst:
Teilen der geänderten ersten Datei in der Datenbank durch das erste Endgerät mit der zweiten APP.

5. Endgerätevorrichtung, umfassend:
mindestens einen Prozessor und einen Speicher, wobei der Speicher dazu konfiguriert ist, Programmanweisungen zu speichern; und
der Prozessor dazu konfiguriert ist, die in dem Speicher gespeicherten Programmanweisungen aufzurufen und auszuführen, sodass die Endgerätevorrichtung das Dateianwendungsverfahren nach einem der Ansprüche 1 bis 4 durchführt.

6. Computerlesbares Speichermedium, wobei
das computerlesbare Speichermedium Anweisungen speichert, und, wenn die Anweisungen auf einem Computer umgesetzt werden, der Computer in die Lage versetzt wird, das Dateianwendungsverfahren nach einem der Ansprüche 1 bis 4 durchzuführen.

## Revendications

1. Procédé d'application de fichier, comprenant :
la réception (S11), par un premier dispositif terminal, d'une première opération sur un premier fichier, dans lequel la première opération est une opération qui modifie le premier fichier, et le premier fichier est un fichier d'une première application, APP ;
l'affichage (S12), par le premier dispositif terminal, d'une première icône flottante du premier fichier en réponse à la première opération ; et
après avoir reçu une deuxième opération sur la première icône flottante, le partage (S13), par le premier dispositif terminal, du premier fichier avec une seconde APP ; dans lequel la deuxième opération est utilisée pour indiquer de partager le premier fichier avec la seconde APP, et la première APP et la seconde APP sont des APP installées sur le premier dispositif terminal ; et dans lequel
le procédé comprend en outre :
après avoir reçu une quatrième opération sur la première icône flottante, et/ou si aucune deuxième opération sur la première icône flottante n'est reçue dans une première période de temps, la fermeture (S19), par le premier dispositif terminal, de l'affichage de la première icône flottante.

2. Procédé selon la revendication 1, dans lequel, avant l'affichage, par le dispositif terminal, d'une première icône flottante du premier fichier, le procédé comprend en outre :
la détermination (S17), par le premier dispositif terminal, du fait que la première APP est une APP cible, dans lequel un fichier de l'APP cible comprend un fichier modifiable ; et
après avoir déterminé que la première APP est une APP cible, la détermination, par le premier dispositif terminal en surveillant un état de traitement du premier fichier, du fait que le traitement du premier fichier est terminé.

3. Procédé selon la revendication 2, dans lequel la détermination, par le premier dispositif terminal, que la première APP est une APP cible comprend :
la détermination, par le premier dispositif terminal, d'informations sur la première APP sur la base d'un package d'installation de la première APP ; et
lorsque les informations sur la première APP indiquent qu'un fichier de la première APP comprend un fichier modifiable, ou lorsque les informations sur la première APP indiquent que la première APP est une APP comprise dans une liste d'applications cibles, la détermination, par le premier dispositif terminal, du fait que la première APP est une APP cible, dans lequel la liste d'applications cibles comprend au moins une APP cible.

4. Procédé selon la revendication 1, comprenant en outre :
une fois la modification du premier fichier terminée, le stockage d'un premier fichier modifié dans une base de données ; et
le partage, par le premier dispositif terminal, du premier fichier avec la seconde APP comprend :
le partage, par le premier dispositif terminal, du premier fichier modifié dans la base de données avec la seconde APP.

5. Appareil terminal comprenant :
au moins un processeur et une mémoire, dans lequel la mémoire est configurée pour stocker des instructions de programme ; et
le processeur est configuré pour invoquer et exécuter les instructions de programme stockées dans la mémoire, de sorte que l'appareil terminal réalise le procédé d'application de fichier selon l'une quelconque des revendications 1 à 4.

6. Support de stockage lisible par ordinateur, dans lequel le support de stockage lisible par ordinateur stocke des instructions, et lorsque les instructions sont exécutées sur un ordinateur, l'ordinateur est activé pour réaliser le procédé d'application de fichier selon l'une quelconque des revendications 1 à 4.
